# EUROPEAN PATENT SPECIFICATION

(11) **EP 3 190 528 B1**
(45) Date of publication and mention of the grant of the patent: **05.03.2025**
(21) Application number: 17150081.2
(22) Date of filing: 03.01.2017
(51) Int. Cl.: G06F 30/13, G06F 30/18

(54) **SYSTEM AND METHODS FOR CREATING AND MANAGING GEOSPATIAL NETWORK MODEL IN A CLIENT ENVIRONMENT**
SYSTEM UND VERFAHREN ZUR ERZEUGUNG UND VERWALTUNG EINES GEOSPATIALEN NETZWERKMODELLS IN EINER CLIENT-UMGEBUNG
SYSTÈME ET PROCÉDÉS DE CRÉATION ET DE GESTION DE MODÈLE DE RÉSEAU GÉOSPATIAL DANS UN ENVIRONNEMENT CLIENT

(30) Priority: 05.01.2016 US 201662275076 P; 05.01.2016 US 201662275105 P; 19.01.2016 US 201662280682 P
(43) Date of publication of application: 12.07.2017
(73) Proprietor: Schneider Electric USA, Inc., Boston, MA 02108 (US)
(72) Inventor: BENNETT, John, Garrett Park, MD Maryland 20896 (US); HEATER, Kevin Abram, Fort Collins, CO Colorado 80524 (US); BRAUN, Michael Louis, Fort Collins, CO Colorado 80525 (US)
(74) Representative: Murgitroyd & Company

(56) References cited:
- US-A1- 2004 236 620
- US-A1- 2008 091 742
- US-A1- 2012 066 578
- US-A1- 2013 211 797
- US-A1- 2015 012 148

## Description

### BACKGROUND

Utility companies provide services such as electricity, gas, water, telecommunication, cable television, etc., to customers. All of these services require pipeline and/or cable networks for the area that is being serviced. Data representing the distribution facilities (poles, conductors, transformers, switching and protective equipment, etc. for electric distribution utilities) are stored in a facilities database, typically a relational database that includes geospatial attributes (i.e. a Geographic Information System, or GIS). Software applications (e.g., network design applications) can then be used for designing, editing, analyzing, and/or visualizing distribution networks that are represented in a GIS database (e.g., a geodatabase or GDB).

One of the analysis functions provided by the network design applications is "electric tracing." The electric tracing function identifies and displays on a map all of the features (i.e., objects with a geometric shape) that are electrically "upstream" or "downstream" of a given feature selected by a user as the starting point of the trace. The implementation of the electric tracing function is based on a model of the distribution network. Existing models of the distribution network are typically based on relational database management systems (RDMS). One example of such a model is the "Geometric Network" model. The Geometric Network model comprises of a set of connected edges (lines) and junctions or vertices (points) and connectivity rules that are used to represent and model the behavior of the network in the real world. The Geometric Network model is created server-side and stored in a geodatabase.

Implementation of network analysis functions including the tracing function based on the Geometric Network has several problems. As the Geometric Network model is stored in the GIS database, a proprietary API is required to query the Geometric Network for connectivity relationships between objects and to obtain the geographic shape for objects. This API, however, is platform dependent, i.e., it is only available where there is a full installation of a corresponding software product (ArcGIS Desktop) which is available for Windows and Linux based operating systems. The software product cannot be installed on mobile operating systems such Android, iOS and Windows Mobile. While web-based access to GIS data through the ArcGIS Server product is available, the web API does not include any functions for direct access to the network topology (i.e., relationships between objects) contained in a Geometric Network. Without the access to the network topology, any usable implementation of electric tracing functions is not possible.

Another problem with the Geometric Network model is high latency. Typically, once a user makes a selection on a map in an application executing on the user device, the user has to wait for the application to make a query to the geodatabase and receive a response back from the geodatabase before the results can be rendered on a display of the user device. If the user makes another selection on the map, a new query is sent to the geodatabase. This behavior can cause the application to be slow or completely unresponsive, and thereby negatively impact user experience with the application.

In addition to the above problems, there is considerable complexity in implementing the tracing function based on the Geometric Network model. For example, the presence of loops and multiple circuit sources may be compounded by cases where the electrical phases A, B, and C are differentially present (for conductors) and/or differentially blocked (by switching equipment) in various parts of a distribution circuit. The Geometric Network offers very little support for modeling these situations and as such, tracing implementations based on the Geometric Network are typically inefficient and susceptible to bugs.

Existing network design applications typically work directly against the GIS database model (e.g., Geometric Network) and execute queries and calculations in the GIS which can result in performance issues (e.g., longer processing times and slow response). Moreover, such applications typically enable engineering analyses to be performed as part of post-edit operations. For example, consider a network design that is being edited by a user using an application. The application provides a "build" functionality which when instantiated causes execution of one or more queries on a network model data stored in the GIS. The results from the query executions provide an indication as to whether the edits have been successfully applied to the network model. This approach to checking for errors in network design by querying the GIS increases the application response time. Moreover, if the results from GIS indicate that some of the edits cannot be applied to the network design (e.g., because the edits violate design rules), depending on how much editing was done before "building" the network design, the user may need to spend considerable time fixing those errors in the network design. Even after the user has fixed the errors, the user would need to "rebuild" the network design to check against the GIS whether the fixes can be applied to the GIS network model. Overall, the existing technique of validating network designs at the GIS is an inefficient process that consumes more network resources (e.g., bandwidth) and causes poor application performance. At least in part because of these inefficiencies, existing network design applications are typically not suitable for mobile devices that have power and bandwidth constraints.

Some engineering applications such as Milsoft and CymeDist work outside of the GIS, but are reliant on using data exported from the GIS and are capable of performing only a specific set of engineering calculations. Moreover, as these applications are not integrated with the GIS network, network information in the GIS is not affected or influenced in any way as a result of editing or calculations performed in these applications.

The need exists for a model for a utility distribution network and a network design application that overcome the above problems, as well as one that provides additional benefits. Overall, the examples herein of some existing or related models and/or systems and their associated limitations are intended to be illustrative and not exclusive. Other limitations of existing models and/or systems will become apparent to those of skill in the art upon reading the following Detailed Description.

The following documents may be useful for understanding the background:
US 2008/091742 A1 (Marshall Elizabeth) 17 April 2008 discloses software-executed methods employed by computer-based systems deployed via intranets and the Internet are described. The software-executed methods include computer readable instructions to allow access and to identify at least one changing attribute, either spatially related or alphanumerically related, that exists between an originally created Geographical Information System dataset file and its replicated variation or child versions. The computer readable instructions also provide for the synchronizing and storing the child versions to the parent or original dataset file in the Geographical Information System and to an external business system.;
US 2013/211797 A1 (Scolnicov Haggai et al) 15 August 2023 discloses a computerized method for modeling a utility network. The method includes retrieving geographical information system (GIS) data, asset management data, and sensor archive data of one or more assets of the utility network. The method also includes generating one or more mathematical elements from the one or more assets and creating probable connections between the one or more mathematical graph elements based on the GIS and asset data. A mathematical graph is generated based on the probable connections, the mathematical graph including one or more asset characteristics of the one or more assets. Analysis is performed on the utility network using the mathematical graph and the mathematical graph data is stored for use by other systems within the utility network.; and
US 2015/012148 A1 (Bhageria Jr Gopal K et al) 8 January 2015 discloses models of a distribution network grid are automatically updated in response to real-time location data of uniquely identified temporary devices. Current geographical coordinates are determined within a distance tolerance that is selected as a function of a type of device indicated by the identity indicia. The geographical information system model is updated with a location of a unique identity of the device at the determined current geographical coordinates within the distance tolerance if unique identity of the device not already present within the geographical information system model, or if it is present and a displacement distance from the determined current geographical coordinates of the temporary device to existing geographic coordinates that are stored in the geographical information system model in association with the unique device identity exceeds a specified distance margin.

### SUMMARY

Various embodiments and aspects for creating, managing and/or manipulating Geographic Information System (GIS) data in a client environment are disclosed. It is an object of the present invention to provide a method of managing GIS data on a client device. This object can be achieved by the features as defined by the independent claims. Further enhancements are characterized by the dependent claims. The invention is defined by the claims. In accordance with some embodiments, a client device receives GIS feature data for a distribution network from a GIS database, wherein the distribution network includes a utility distribution network including a water distribution network, a gas distribution network, an electric distribution network or a telecom distribution network. The client device further constructs a network model using the GIS feature data received from the GIS database and stores the network model locally. The client device, via an application for example, accesses the network model to display a design of the distribution network. In some aspects, the feature data received from the GIS database is associated with the distribution network corresponding to an area of interest. In some embodiments, the client device can be a smart phone or a tablet. The client device determines a current state and an initial state of the distribution network on the client device. The initial state of the distribution network on the client device corresponds to a current state of the distribution network on the GIS database. The client device compare the initial state of the distribution network and the current state of the distribution network on the client device to determine changes to the design of the distribution network and send the changes to the design of the distribution network to the GIS database to update the current state of the distribution network in the GIS database, wherein constructing the network model for the distribution network comprises utilizing the GIS feature data to create a set of adjacency relationships between features in the distribution network and performing a traversal of the distribution network using the set of adjacency relationships and attributes of the features in each step of the traversal to generate a data structure that represents the network model for the distribution network. The client device detects one or more changes to the design of the distribution network associated with the network model. The client device validates the one or more changes against one or more validation rules. The validating utilizes the network model associated with the distribution network stored on the client device.

Further embodiments include renumbering objects in the data structure to store the data structure as an array on the hardware device, wherein an index of the array is a proxy for the corresponding object's original identifier in the GIS database, and mapping GIS identifiers of the objects in the data structure to index values of the array. In some embodiments, the data structure comprises a set of directed adjacency relationships and corresponding attributes. The data structure can be stored in the form of an array in a cache memory on the client device. In some embodiments, the data structure stored in the cache memory of the client device can be accessed to perform a network analysis operation. The network analysis operation can include, for example, at least one of: a tracing operation or an attribute query operation. In some embodiments, the attributes include a source identifier attribute identifying a source vertex from which the traversal began, and a phases attribute indicating which of the electrical phases from the source vertex that pass through a first vertex reach an adjacent vertex.

In accordance with some embodiments, the one or more changes to the design of the distribution network are made via the application. The application can present, in real time, a graphical feedback on the one or more changes based on a result of the validating. In some aspects, the graphical feedback identifies a violation of the one or more validation rules and a component in the distribution network associated with the violation as the result of the validating.

In accordance with some embodiments, the distribution network can be an electrical distribution network and the validating includes at least one of: performing a load flow analysis or calculating fault currents. In accordance with some embodiments, the distribution network is a telecom distribution network and the validating includes performing signal and powering calculations.

In accordance with some embodiments, a new data structure can be instantiated (e.g., in client device) in response to a transaction corresponding to the one or more changes to the design of the distribution network to represent a new state of the distribution network on the client device. In some aspects, the new data structure includes objects that changed in response to the transaction and reference points for objects that did not change in response to the transaction, the reference points pointing to objects in a data structure representing an old state of the distribution network.

In accordance with some embodiments, the initial state of the distribution network on the client device transitions into the current state of the distribution network on the client device, directly or via one or more intervening states in response to application of one or more commands to the design of the distribution network. In some aspects, the one or more commands correspond to operations to modify the design of the distribution network. In further aspects, the one or more commands originate from one or more user interactions with the application utilizing the network model of the distribution network.

In accordance with some embodiments, sending the changes to the design of the distribution network to the GIS database to update the current state of the distribution network in the GIS database includes sending, by the application on the client device, one or more data packets including one or more commands and object attributes via an application programming interface.

In accordance with some embodiments, the client device can record, on a data file, one or more commands corresponding to one or more operations to modify the design of the distribution network associated with the network model, the one or more commands causing a state of the distribution network to transition to a first state. The client device can merge the first state of the distribution network with a second state of the distribution network by executing at least a subset of the one or more commands against the second state of the distribution network. In some aspects, the first and second states include changes made to the distribution network at different points of time or at different sources.

In accordance with some embodiments, the client device can record multiple states corresponding to the distribution network, each state being associated with a shared command history that is common to the multiple states and a distinct command history that is unique to each of the multiple states. In some aspects, responsive to user request, the client device can switch from a first state of the multiple states to a second state of the multiple states by undoing one or more commands in the distinct command history associated with the first state and applying one or more commands in the distinct command history associated with the second state.

In accordance with some embodiments a non-transitory machine-readable medium can store instructions executable by a client device. The instructions can include instructions for constructing, on the client device, a network model using the GIS feature data received from the GIS database, instructions for accessing a network model for a distribution network stored on a client device, instructions for detecting one or more changes to the distribution network associated with the network model, instructions for validating the one or more changes to the distribution network against one or more validation rules, instructions for determining a current state and an initial state of the distribution network on the client device, wherein the initial state of the distribution network on the client device corresponds to a current state of the distribution network on the GIS database, instructions for comparing the initial and current states of the distribution network on the client device to determine changes to the design of the distribution network, and instructions sending the one or more changes to the distribution network to a GIS database to update the current state of the distribution network in the GIS database.

In accordance with some embodiments, a system for managing a Geographic Information System (GIS) data is provided. The system can include a client device that is configured to store a network model for a distribution network, access the network model to display the distribution network, detect one or more changes to the distribution network associated with the network model, validate the one or more changes to the distribution network against one or more validation rules, and send the one or more changes to the distribution network to a GIS database to update the current state of the distribution network in the GIS database.

### BRIEF DESCRIPTION OF THE DRAWINGS

**FIG. 1** is a block diagram illustrating an example environment in which a system and method for creating a geospatial network model (hereinafter "disclosed system" or "disclosed technology") can operate.
**FIG. 2** is a graphical diagram illustrating an example of Geographic Information System ("GIS") feature data for an electric distribution circuit.
**FIG. 3** is a graphical diagram illustrating a graphical representation of the GIS feature data from **FIG. 2****.**
**FIG. 4** is a block diagram illustrating example components of a smart network design application or system in accordance with some embodiments of the disclosed system.
**FIG. 5** is a graphical diagram illustrating an adjacency list for an undirected graph based on the GIS feature data from **FIG. 2****.**
**FIG. 6** is a graphical diagram illustrating an adjacency list for a directed graph created from the undirected graph in **FIG. 5****.**
**FIG. 7** provides an example code representation of an electric network model.
**FIG. 8** is a logic flow diagram illustrating an example method of creating a geospatial network model within a client environment using raw GIS feature data from a geodatabase.
**FIG. 9** is a graphical diagram illustrating a portion of an electric distribution circuit with tracing results showing objects that are upstream and downstream from a point of selection.
**FIG. 10** is a block diagram illustrating example components of a smart network design application or system in accordance with some embodiments of the disclosed system.
**FIG. 11A** is a logic flow diagram illustrating an example method of validating network configuration changes in client environment in accordance with some embodiments of the disclosed system.
**FIG. 11B** is a logic flow diagram illustrating an example method of providing a graphical feedback on a network transaction in real time in accordance with some embodiments of the disclosed system.
**FIG. 12A** and **12B** are schematic diagrams illustrating graphical feedback displayed in response to a network configuration change in accordance with some embodiments of the disclosed system.
**FIG. 13** is a block diagram illustrating example pathways in which network information can flow between client devices and between a client device and the GIS in accordance with some embodiments of the disclosed system.
**FIG. 14** is a block diagram illustrating example components of a smart network design application or system in accordance with some embodiments of the disclosed system.
**FIG. 15A** is a block diagram illustrating command building and tracking in some embodiments of the disclosed system.
**FIG. 15B-D** are diagrams illustrating command history branches in some embodiments of the disclosed system.
**FIG. 16** is a logic flow diagram illustrating an example method of syncing network changes made to a network in a client device to the GIS in accordance with some embodiments of the disclosed system.
**FIG. 17** is a logic flow diagram illustrating an example method of merging changes made to a network in accordance with some embodiments of the disclosed system.
**FIG. 18** is a logic flow diagram illustrating an example method of undoing or redoing changes made to a network in accordance with some embodiments of the disclosed system.
**FIG. 19** is a schematic diagram illustrating a hypernode construct for facilitating efficient storage and transfer of network information.
**FIG. 20** is a logic flow diagram illustrating an example method of managing GIS data in a client environment in accordance with some embodiments of the disclosed system.
**FIG. 21** is a block diagram of an exemplary apparatus that can perform various operations, and store various information generated and/or used by such operations in some embodiments of the disclosed technology.

### DETAILED DESCRIPTION

### 1. Overview

The present disclosure describes technology for creating a geospatial network model (hereinafter "network model") for a distribution network in a client environment using geospatial information system (GIS) data from GIS and managing and/or manipulating the network model. In some embodiments, managing and/or manipulating the network model includes validating, in the client environment, network designs built using the network model, and/or merging and synchronizing network design changes with the GIS (hereinafter "disclosed technology" or "disclosed system").

In various embodiments, the distribution network ("network") may be an electric distribution network, a gas distribution network, a water distribution network, a telecom distribution network, or the like. In some embodiments, the disclosed system, operating in a client environment, fetches content in the form of GIS data for an area of interest from a GIS database (e.g., a geodatabase) and transforms the GIS data into a network model. In accordance with the disclosed technology, the network model of a distribution network is a specialized data structure that is created and stored locally on a client device in order to enable real-time or near real-time analyses of the distribution network.

In some embodiments, the disclosed system provides a design environment that includes various features and functionalities for manipulating (e.g., viewing, editing and/or analyzing) a network model or design on a client device. The disclosed system can validate, in the client environment, any distribution network configuration changes resulting from the manipulation of the network design.

In some embodiments, the disclosed system can merge network changes to a distribution network and synchronize network changes to the distribution network made outside of the GIS with the GIS.

These and various other embodiments of the disclosed system will now be described in detail.

### 2. Example Environment

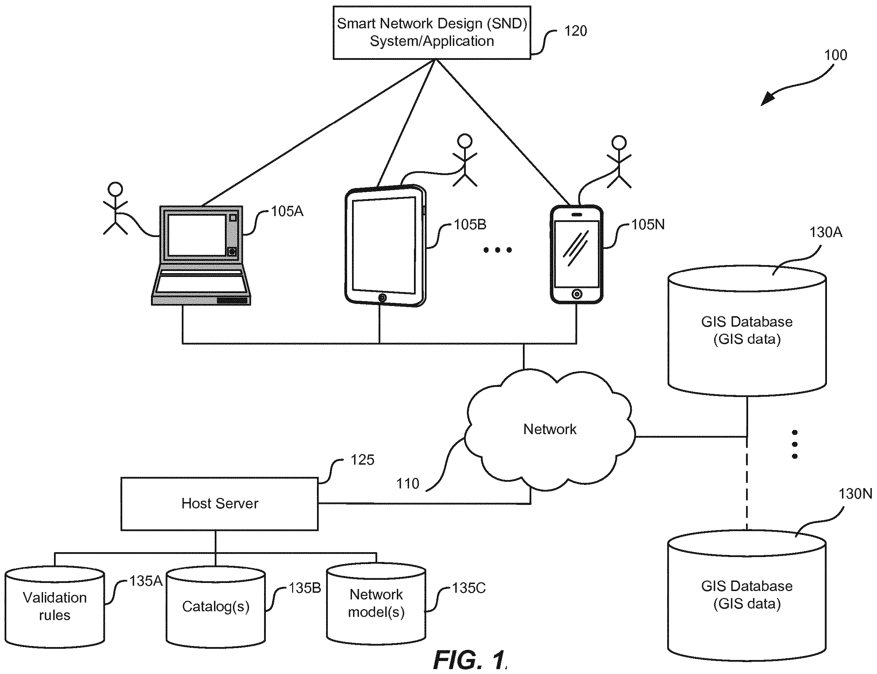

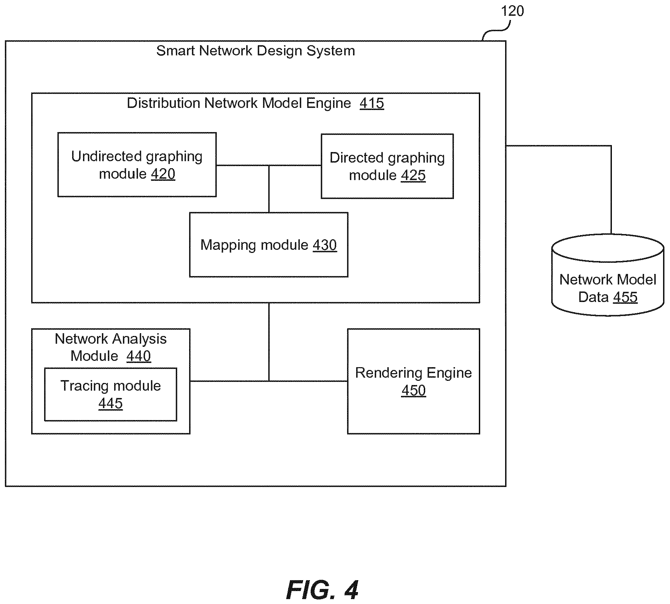

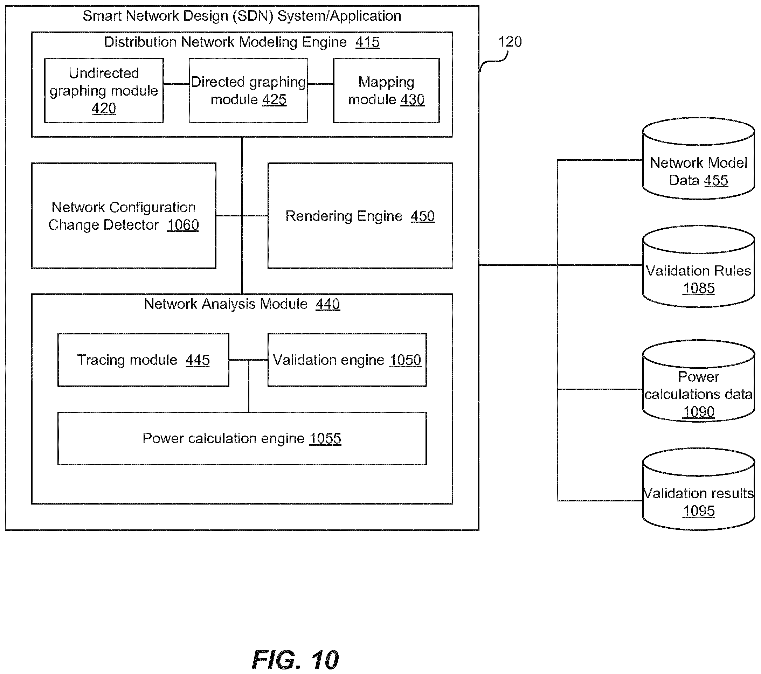

**Figure 1** is a block diagram illustrating an example environment in which the disclosed system can operate. As illustrated, the environment 100 comprises one or more client devices 105A-N (hereinafter client device 105), a communication network 110 and one or more GIS databases 130A-N (hereinafter GIS database 130). The client device 105 can be any hardware device that is able to establish a connection with another device or server, directly or via a communication network 110. Examples of a client device 105 include, but are not limited to: a desktop computer, a thin-client device, a mobile computing device such as a notebook, a laptop computer 105A, a handheld computer, a mobile phone, a smart phone 105N, a tablet 105B, a phablet, and/or the like. The client device 105 typically includes one or more input/output devices to facilitate user interaction (e.g., to display a map, to enable a user to make a selection of an area on the map). The disclosed system can be embodied in a smart network design (SND) application 120 (hereinafter "design application 120") which is installed in the client device 105. The design application 120 can be downloaded from a server (e.g., host server 125, an application store or a repository) and installed on the client device 105. In some embodiments, the design application 120 can be a web-based application that can be accessed via a web-browser. In some embodiments, the web-based application can operate by utilizing data stored in the browser's local storage (i.e., network model data remains in the client device but the data may be periodically backed up in the host server or a cloud). Various components or modules of the disclosed system are described in detail in reference to **FIGS. 4** and **10****.**

The GIS database 130 is a database or file structure that stores objects defined in a geometric space. One example of a GIS database is a geodatabase. Typically, each utility maintains its own GIS database. For example, a gas company can have its own GIS database that stores GIS data for its gas distribution network. Similarly, an electric company can have its own GIS database that stores GIS data for its electric distribution network. The GIS database 130 typically supports query execution on stored data as well as manipulation of the stored data. Examples of data stored in the GIS database include, but are not limited to: geometry or shape data and attributes of objects, typically grouped into different feature classes. The GIS database 130 may be implemented in Microsoft SQL Server, PostgreSQL relational database management systems, Microsoft Access, Oracle, IBM DB2, IBM Informix, and/or the like.

In some embodiments, the environment 100 includes a host server 125. The host server 125 can provide access to data needed to perform client-side validation of network designs. For example, the host server 125 can maintain one or more databases or database tables for storing validation rules 135A, catalogs 135B and network models 135C. The validation rules 135A can include rules to ensure that a network design meets certain requirements and/or standards. Typically, validation rules are specific to a distribution network. For example, in a gas distribution network, an applicable validation rule may be the diameter of a gas valve must match the diameter of the pipe to which the valve is snapped. By way of another example, in an electric distribution network, an example validation rule may be that the rated kVA of a transformer must be equal to or greater than 80% of the sum of estimated peak loads of the customers connected to the transformer. In some embodiments, the validation rules can be configured and extended to meet the specific requirements of a user (or designer) or an organization.

The catalogs 135B can store components and design configurations that a network designer can use to design a network. The catalog of components can be grouped into project files. A project file specifies a network configuration (i.e., amplifier cascade count, frequency range, target customer counts to reach per branch, etc.) as well as components and cables that have been determined to work well (and are in active inventory rotation) for the given network configuration. Grouping components into project files ensures that a selected component will work for the given design configuration and with the other components specified by a project file. This grouping also aids in efficient creation of a network design by greatly reducing the set of components to choose from in the designer's toolbox - from all components held in an organization's inventory to just a subset selected for the particular design configuration at hand. In some embodiments, the disclosed system can download and store locally on the client device one or more project files associated with one or more network models stored in the client device.

The network models 135C can store network models associated with network designs. The network models are in general created client-side, and can be uploaded to the host server 125 periodically or on demand for back up or for reuse.

The communication network 110, over which the client device 105 and the one or more geodatabases 130 communicate may be a telephonic network, an open network, such as the Internet, or a private network, such as an intranet and/or the extranet. The communication network 110 can be any collection of distinct networks operating wholly or partially in conjunction to provide connectivity to the client devices 105 and the GIS databases 130 and may appear as one or more communication networks to the serviced systems and devices. In some embodiments, communications can be achieved by a secure communications protocol, such as secure sockets layer (SSL), or transport layer security (TLS).

In addition, communications can be achieved via one or more wireless networks, such as, but is not limited to, one or more of a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), Global System for Mobile Communications (GSM), Personal Communications Service (PCS), Digital Advanced Mobile Phone Service (D-Amps), Bluetooth, Wi-Fi, Fixed Wireless Data, 2G, 2.5G, 3G, 4G, 4G-LTE networks, enhanced data rates for GSM evolution (EDGE), General packet radio service (GPRS), enhanced GPRS, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks or messaging protocols.

The client devices 105 can be coupled to the communication network 110 (e.g., Internet) via a dial up connection, a digital subscriber loop (DSL, ADSL), cable modem, and/or other types of connection. Thus, the client devices 105 can communicate with remote servers (e.g., NDA/host server 125, GIS database 130, mail server, instant messaging server), some of which may provide access to user interfaces of the World Wide Web via a web browser, for example.

### 3. Geospatial Network Model

The network model, in accordance with the disclosed technology, is a directed graph comprised of vertices and directed edges. Each feature in the GIS source data can be modeled as one or more vertices in the network model. This is true for linear GIS features (e.g. electric conductors, or gas pipes) as well as for point features (e.g. transformers, switches, fuses, valves, regulators, etc.) The edges in the network model represent the directed flow of the commodity (i.e. electric power, or gas, or water, etc.) through the facilities represented by the vertices. The edges may be endowed with attributes that provide details about the commodity flow. For example, the edges in an electric network model carry a Phases attribute to indicate which electrical phases flow through the edge from one vertex towards another, as well as a power source identifier to indicate the vertex (which may be remote) that represents the ultimate source of the power flowing through the edge (e.g. the substation circuit breaker for a distribution feeder circuit). In some embodiments, the vertices typically carry attributes to indicate the type of equipment they represent (e.g. conductor, sectionalizing device, transformer, service point, branching node, etc.) and/or other properties of interest to the modeling domain. For example, electric switches carry a property that indicates the switching state of the device (i.e. open or closed) on each phase.

As described above, the disclosed technology transforms the features or database objects representing conductors, transformers, switches, fuse, and the like into a network model. In some embodiments, the transformation includes determining adjacency relationships between the GIS database objects and determining an order for the adjacency relationships, along with other attributes such as sources of power for the distribution network (e.g., feeder systems) and electrical phases. Thus, following the transformation process, each object in the network model knows not only who its neighbors are but also which of the objects are its upstream neighbors and which of the objects are its downstream neighbors, where the power that energizes the distribution network is coming from and which of the energized electrical phases are being allowed to flow through the adjacencies.

In accordance with some embodiments of the disclosed technology, the transformation of the GIS data comprises using the GIS data for a distribution network to construct an undirected graph (or undirected network) which establishes adjacency relationships between the features. The undirected graph can be represented by an adjacency list that includes object pairs that are adjacent to each other. For example, if object V₁ is neighbors with object V₂, the adjacency list would comprise the following pairs of objects: (V₁, V₂) and (V₂, V₁). In other words, the path may go from V₁ to V₂ or from V₂ to V₁. The transformation process further includes performing a series of traversals of the undirected graph starting at each circuit source vertex paying attention to the phase attribute of the features to create a directed graph. The directed graph comprises a set of directed adjacencies and is represented by an adjacency list that includes ordered object pairs with source and phase properties or attributes. In alternative embodiments, GIS can be the source for adjacency relationships, and as such the transformation process can comprise transforming the undirected graph into a directed graph as described above. In some embodiments, the disclosed technology renumbers the objects in the directed graph so that the data structure corresponding to the directed graph can be stored in the form of an array in a memory (e.g., cache memory) on the client device. The disclosed technology also generates a mapping between the original object IDs (or GIS IDs) and the array indexes to enable adjacent object look ups in constant time regardless of the size of the array. In other words, the disclosed technique for storing the directed graph ensures that the adjacency look up performance is predictable and not worse on bigger networks with more features. Alternatively, in some embodiments, adjacency look ups may be based on a hash look up of GIS IDs.

With the source and phase properties on each adjacency being available from the directed graph data structure which is stored locally in memory, the tracing operation according to the disclosed technology does not need to perform additional GIS database queries beyond the initial database queries to fetch GIS data (i.e., spatial and geometric data). By keeping the GIS database queries to a minimum, and thereafter, constructing and storing the network model locally on a client device, the disclosed technology saves on bandwidth and other network resources.

The disclosed technology further implements the tracing operation more efficiently and thereby improves the speed at which tracing operations are performed and results of the operations are displayed to a user. The disclosed technology simplifies some of the complexity behind the implementation of the tracing operation. The disclosed technology also re-uses as much of the pre-computed locally stored network model data as possible for tracing operations so that the amount of new calculations to be performed is reduced. This technique helps improve the speed of tracing operations so that a user can repeatedly select any point on a map and be able to view results of the tracing operations instantly, in real-time, without any perceivable latency. Moreover, once the GIS data has been fetched, the disclosed technology performs the initial calculations and any new calculations without the help of a server, which has the advantage of providing offline network analysis functionality.

The disclosed technology provides various other advantages. For example, the disclosed technology is platform and device agnostic. The technology codebase can be adapted for various operating systems including Windows OS, Mac OS and Linux OS, as well as mobile operating systems such as Windows Mobile, iOS, Android, and/or the like. The disclosed technology thus enables a user to be able to perform network analysis using a portable client device such as a tablet from any location (e.g., field site).

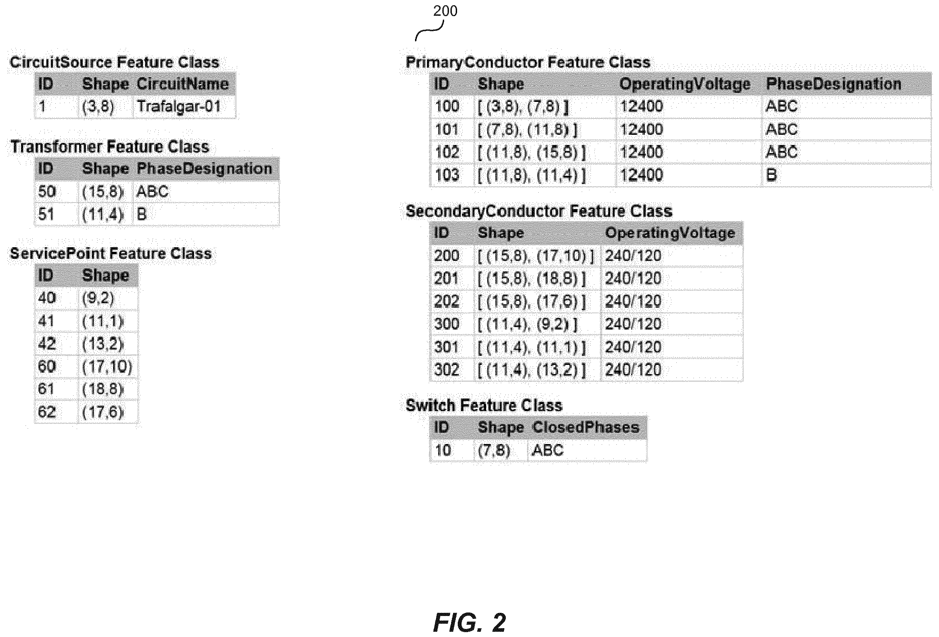

**FIG. 2** is a graphical diagram illustrating an example of Geographic Information System ("GIS") feature data for an electric distribution circuit that is transformed into a network model for the electric distribution circuit by the disclosed technology.

The GIS feature data 200 stored in a GIS database (e.g., GIS database 130) includes various feature classes (i.e., database tables) such as the CircuitSource, Transformer, ServicePoint, PrimaryConductor, SecondaryConductor and Switch feature classes. These feature classes are exemplary and some GIS databases may include additional or different set of feature classes depending on the GIS data model. By way of example, in addition to the PrimaryConductor and SecondaryConductor feature classes, the GIS data model for conductors may also include other feature classes such as UndergroundPrimaryConductor, UndergroundSecondaryConductor and BusbarConductor feature classes (not shown). Each feature class includes a collection of individual features or objects, each having an object identifier (ID) and the geometry for the features stored as a shape comprising a sect of vector coordinates (e.g., point, line, polygon), and/or attributes. In this example, the shape or geometry information is conveyed through "geographic coordinates" in a Cartesian arrangement, but other coordinate systems may be used in some other embodiments. For example, the Transformer feature class includes two objects, each having an object ID (50 and 51), a shape (points or vertices given by coordinates (15, 8) and (11, 4)) and an attribute - a phase designation ("ABC" and "B").

An electric distribution circuit typically comprises of a basic trunk or skeleton of 3-phase conductors and equipment, as well as some branches that carry only one or two electrical phases (the neutral conductor may or may not be present in any of the parts of the circuit without regard to the number of phases present). In the GIS model of electric distribution circuit components, a single linear object is used to represent up to 4 separate physical conductor segments that follow a parallel, namely one for each of the 3 electrical phases "A", "B" and "C," and a possible neutral conductor. The actual number and phase-identity of the set of conductors represented by a conductor object in GIS is indicated by a Phase Designation attribute whose value is any combination of the phase letters "A", "B" and "C". Furthermore, each switch, fuse, recloser or other sectionalizing device in the GIS representation of a circuit carries a switch state attribute that indicates whether it is normally open or closed, for each of the 3 phases independently (e.g. a switch may be closed on phase A but open on phases B and C). Thus, if a switch is open on phase A, then power cannot reach any objects downstream of that switch on phase A, even if power might still flow to that equipment on phases B and C (which it will do if the switch is closed on those phases). The names "A", "B" and "C" for the phases are not universal. Some countries use a different naming convention, (e.g. "Red", "Green" and "Brown," or "R", "G" and "B," or others) although virtually all AC electric power distribution systems in the world are 3-phase systems and the physical function and technical description of the three phases is everywhere the same. The NDA application allows the naming convention to be configured to agree with the local practice.

By way of another example, the PrimaryConductor feature class includes four objects, each having an object ID (100, 101, 102, 103) and a linear shape, as well as additional attributes including an operating voltage and a phase designation for the object.

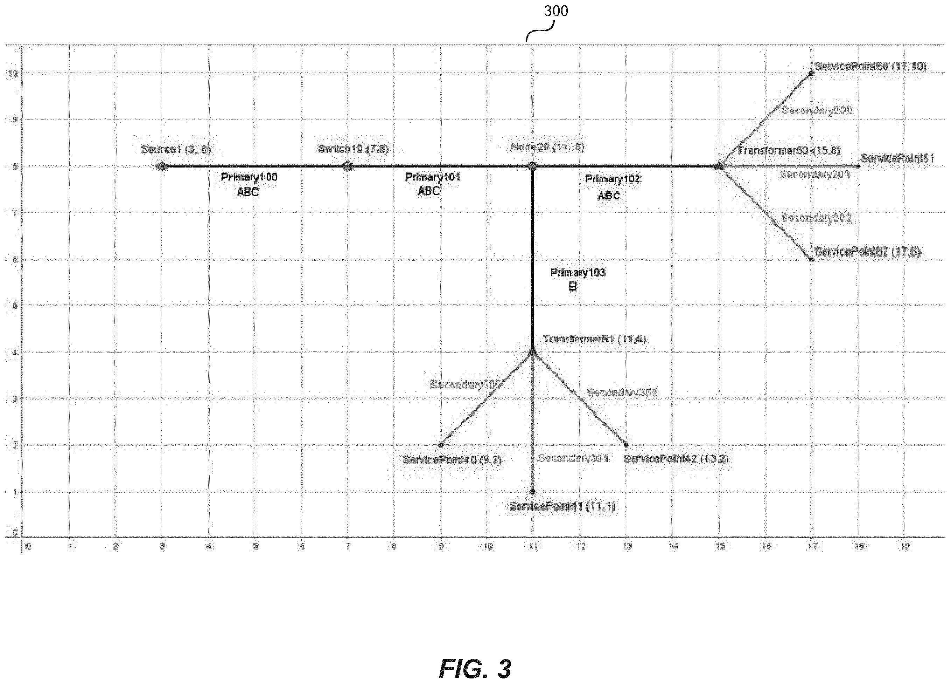

**FIG. 3** is a graphical diagram illustrating a graphical representation of the GIS feature data from **FIG. 2****.**

The disclosed technology uses the geometric information in the GIS feature data to construct an undirected graph (or undirected network) which is a set of adjacency relationships between the features. The adjacency relationships between the features can be clearly illustrated by plotting or tracing on a graph the geometric information in the GIS feature data. For example, the PrimaryConductor 101 coincides with the location of Switch 10 as well as Node 20 in the graph 300, resulting in the creation of two adjacency relationships - one between the PrimaryConductor 101 and the Switch 10 and another between the PrimaryConductor 101 and the Node 20. The adjacency relationship can be represented by an ordered pair of object IDs: (101, 10) and (101, 20). Since it is an undirected graph, the adjacency relationship is commutative, so the complementary ordered pairs (10, 101) and (20, 101) will also be created.

**FIG. 4** is a block diagram illustrating example components of the disclosed system or application 120 in some embodiments.

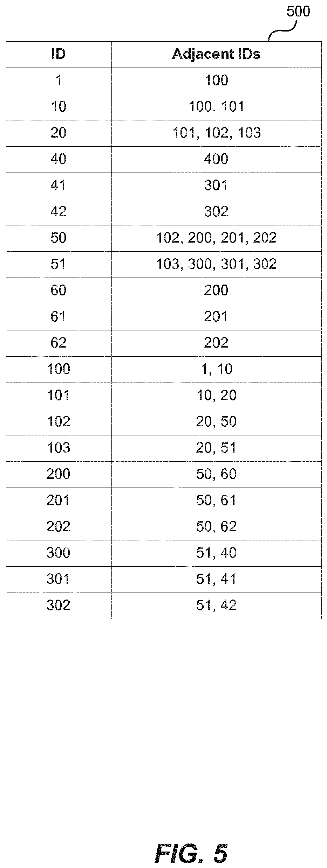

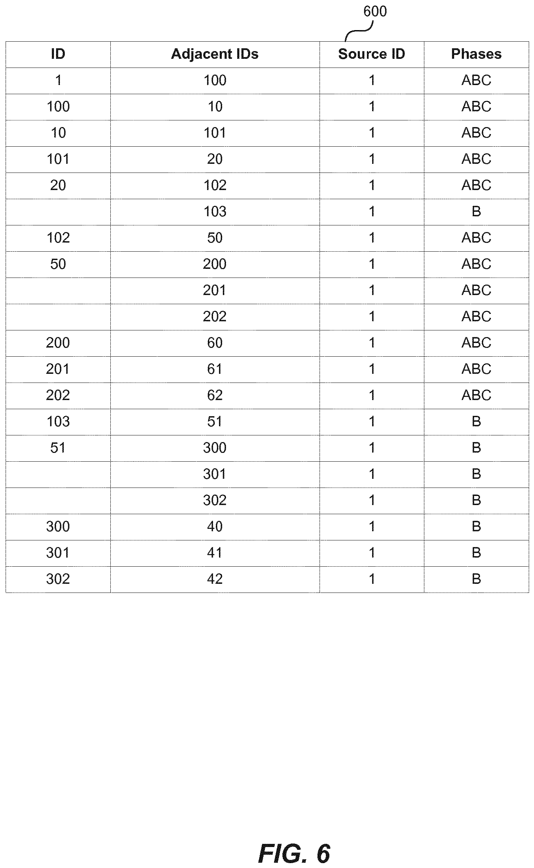

The disclosed system 120 resides in a client device 105 which can be any of the client devices 105 described in reference to FIG. 1. In some embodiments, the disclosed system 120 includes a network modeling engine 415 having an undirected graphing module 420, a directed graphing module 425 and a mapping module 430, a network analysis module 440 having a tracing module 445, and a rendering engine 450. The client device 105 includes a cache memory 455 in which the network model data generated from network model engine 415 is stored for fast access by the network analysis module 440. In some embodiments, the disclosed system 120 may include more or less components. Each of these components of the disclosed system 120 will now be described in detail with reference to **FIGS. 5** and **6****.**

The network modeling engine 415 generates the network model that supports various operations such as visualization, network analysis (e.g., tracing, load flow analysis, operating voltage calculations) and/or editing on a distribution network. The network modeling engine 415, via the undirected graphing module 420, the directed graphing module 425 and the mapping module 430, can transform GIS feature data (e.g., the GIS feature data described in reference to **FIG. 2****)** obtained from a GIS database (e.g., GIS database 130 described in reference to **FIG. 1****)** into a specialized data structure that can be utilized by the tracing module 445 to determine for any given vertex in the graph (e.g., corresponding to a selection made by a user on a map), the set of all vertices that are upstream and/or downstream of that vertex, with regard to the direction of flow of the network commodity (e.g., electric power, water, gas, electromagnetic signal and/or the like). The rendering engine 450 can then render all the features that are upstream of the vertex and all the features that are downstream of the vertex in distinct styles (e.g., by using different coloring schemes or highlighting) to clearly illustrate the flow path of respective electrical phases through the features starting from the source vertex.

In some embodiments, the undirected graphing module 420 utilizes the geometric information in the GIS feature data to construct an undirected graph. As used herein, an undirected graph is a set of adjacency relationships between objects. An adjacency relationship between objects is represented by a commutative pair of object IDs. Referring to **FIG. 2****,** one of the endpoints of PrimaryConductor 101 coincides with the location of Switch 10. The undirected graphing module 420 recognizes this connection or adjacency between PrimaryConductor 101 and Switch 10 and in response creates an adjacency relationship between those objects, represented by an ordered pair of object IDs: (101, 10). Since it is an undirected graph, the adjacency relationship is commutative, so the undirected graphing module 420 also creates a complementary ordered pair (10, 101). Once the adjacency relationships between objects have been determined, the undirected graphical module 420 generates an adjacency list or data structure representing the undirected graph. An example of the adjacency list representing the undirected graph constructed from the GIS feature data 200 from **FIG. 2** is depicted in **FIG. 5****.** As illustrated, the adjacency list 500 includes a collection of object IDs and adjacent object IDs. In other words, the adjacency list 500 associates each object in the undirected graph with a set of neighboring objects. For example, object ID 1 is associated with its neighbor object ID 100, and object ID 100 is associated with its neighbors which include object ID 1, as well as object ID 10.

The directed graphing module 425 operates on the undirected graph, performing a series of traversals of the undirected graph, beginning at each object that is a source vertex to construct a directed graph. As used herein, a directed graph is a set of objects having adjacency relationships, where all the adjacency relationships are directed from one object to another. When traversing the undirected graph, the directed graphing module 425 pays attention to selected attributes of certain objects that are of interest to the application domain. In the domain of electric power distribution, for example, the directed graphing module 425 examines the PhaseDesignation attribute of conductor vertices in the graph and to the ClosedPhases attribute of vertices representing sectionalizing devices. The directed graphing module 425 then uses these attributes to determine, at each step in the traversal, which of the electrical phases that reach a vertex via a given adjacency can be permitted to continue on to the other adjacencies of the vertex. For example, an open switch blocks all phases, and thus a traversal halts upon reaching any open switch. By way of another example, if a traversal brings phases ABC up to a switch that is closed on phases BC but open on phase A, then only phases B and C will be allowed to pass on to the conductor on the far side of the switch. In other words, each time a traversal reaches a vertex V₂ coming from an adjacent vertex V₁, the directed graphing module 425 creates, in a new graph, a directed edge (V₁, V₂) that carries two additional attributes: SourcelD and Phases. The SourcelD attribute identifies the source vertex from which the traversal began. The SourcelD attribute, in some embodiments, effectively serves as an identifier for the entire distribution circuit that is energized by that source. The Phases attribute indicates which electric phases reach all the way from that source to vertex V₂, arriving via vertex V₁.

Referring to the example distribution circuit corresponding to the GIS feature data 200 of **FIG. 2****,** the directed graphing module 425 performs a traversal of the undirected graph to output an adjacency list for the directed graph as illustrated in **FIG. 6****.** The adjacency list 600 for the directed graph includes a set of directed adjacencies with corresponding Source and Phases attributes. The data structure 600 readily supports a tracing operation, i.e., enumerates, for any given vertex in the graph, the set of all vertices that are downstream of that vertex, and all the vertices that are upstream of that vertex. For example, from the data structure it is apparent that vertices 50 and 51 are downstream of vertex 10.

The mapping module 430, in some embodiments, manipulates the adjacency list representing the directed graph to optimize the look up performance for network analysis (e.g., tracing or any other operations), so that the look up performance does not become progressively worse as the size and complexity of a distribution circuit increases. In some embodiments, the mapping module 430 achieves the optimization by renumbering the objects in the directed graph so that the adjacency list for the directed graph can be stored in the form of an array where the array index serves as a proxy for the object's original ID as known to the GIS. Indexing the array in this manner enables random access to the adjacencies for any given vertex in the network, so that the lookup complexity for adjacencies is O(1). The mapping module 430 creates a mapping of GIS IDs to array indexes in the network model, and vice versa, so that the start object for a tracing action can be converted into the corresponding array index, and so that the trace results, which are developed as a set of array index values to represent the traced objects, can be converted into GIS IDs for those objects.

In some embodiments, the specialized data structure representing the network generated by the network model engine 415 is stored in the form of an array in a cache memory 455. When a user selects an object on a map to see the tracing results, the tracing module 445 accesses the network model data in the cache memory 455 to look up objects that are upstream and/or downstream of the object. Because of the caching of the network model data, there is no need to start from the GIS feature data or data representing the undirected graph and traverse the undirected graph again. Instead the module 425 performs the traversal of the undirected graph once to create the directed graph and the mapping module 430 converts the data structure for the directed graph into an array format and stores the array in the cache memory 455. This means that in addition to the upstream and downstream orientations, electrical phases and information about the power source are precalculated and can be quickly recalled from the cache memory for tracing operations or to respond to attribute queries on any object in the circuit. For example, a user can select any object on a circuit, the network analysis module 440 can access the cache memory 455 to recall information such as the power source for that object and the phases that reach the object from the power source and instantly display the results on the map, without performing additional calculations or network operations (e.g., communicating with a server over a network).

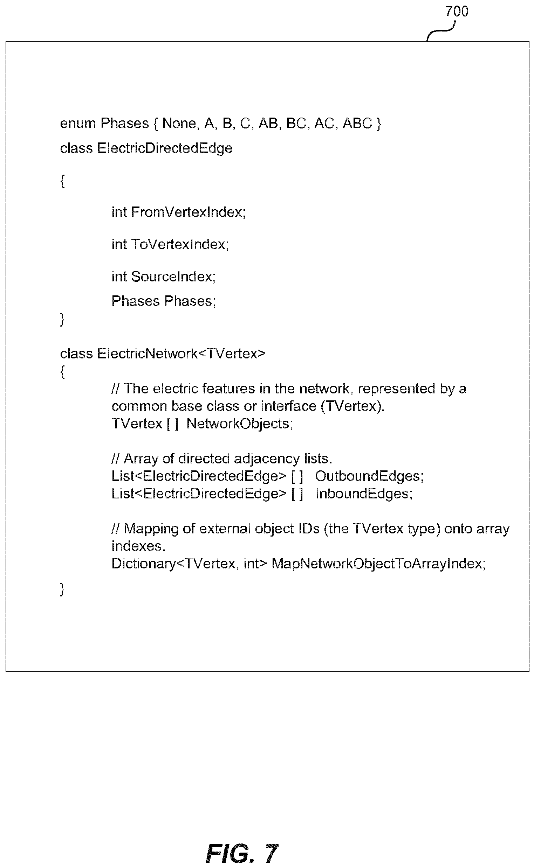

In some embodiments, the structure of the output from the mapping module 430, i.e., a directed graph streamlined for electric circuit tracing in both upstream and downstream directions, can be fully represented in an object oriented programming language using two classes: one class to represent the directed edges with their attributes, and the network class itself that includes the network objects, the adjacencies between the objects (i.e., the directed edges), and the mapping of network object IDs to array index values. **FIG. 7** depicts an example code representation of an electric network model expressing the directed edge class and the network class using C# programming language.

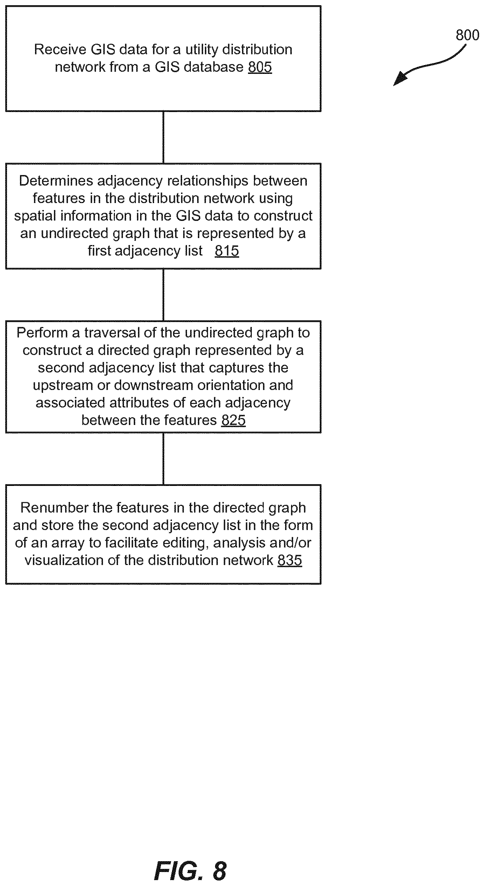

**FIG. 8** is a logic flow diagram illustrating an example method of creating a network model within a client environment using GIS feature data from a GIS database. The example method can be implemented by the disclosed system/application 120 described in reference to **FIG. 4** and can be used for generating network models for other utilities besides electric utility, such as water, gas, telecommunication, or the like.

In some embodiments, a user selects an area on interest on a map displayed on a client device (e.g., client device 105) for which the user wants to create a network model. In some instances, the user may draw a boundary on a map to define the area of interest (e.g., a distribution network or a portion thereof). Once the disclosed system detects the request from the user to create a network model for an area, the disclosed system queries a GIS database that is remote from the client device for network data or GIS data corresponding to the area of interest. At block 805, the disclosed system receives GIS data from the GIS database in response to its query. In some embodiments, the GIS data can include information about GIS features and associated spatial (or geometry) information. At block 815, the disclosed system determines adjacency relationships between the features using the spatial information to construct an undirected graph. The undirected graph can be represented by a first adjacency list that comprises pairs of object IDs, with each pair of object IDs representing an adjacency relationship. In some embodiments, the GIS data can include adjacency relationships between features. In such a case, the undirected graph need not be generated. At block 825, the disclosed system performs a traversal of the undirected graph to construct a directed graph that captures the upstream or downstream orientation and associated attributes of each adjacency between the features. The directed graph can be represented by a second adjacency list that comprises of a set of directed adjacencies with corresponding attributes. At block 835, the disclosed system renumbers the objects in the directed graph and stores the second adjacency list in the form of an array to facilitate editing, analysis and/or visualization of the distribution network. The disclosed system can also store mapping information that maps the original object IDs to the array indexes and vice versa. The network model created by the disclosed system thus includes the array and the mapping information. The network model data can be stored in cache memory on the client device in some embodiments to improve the look up performance for adjacencies and associated attributes that are utilized by network analysis modules 440 such as the tracing module 445 described in reference to **FIG. 4****.**

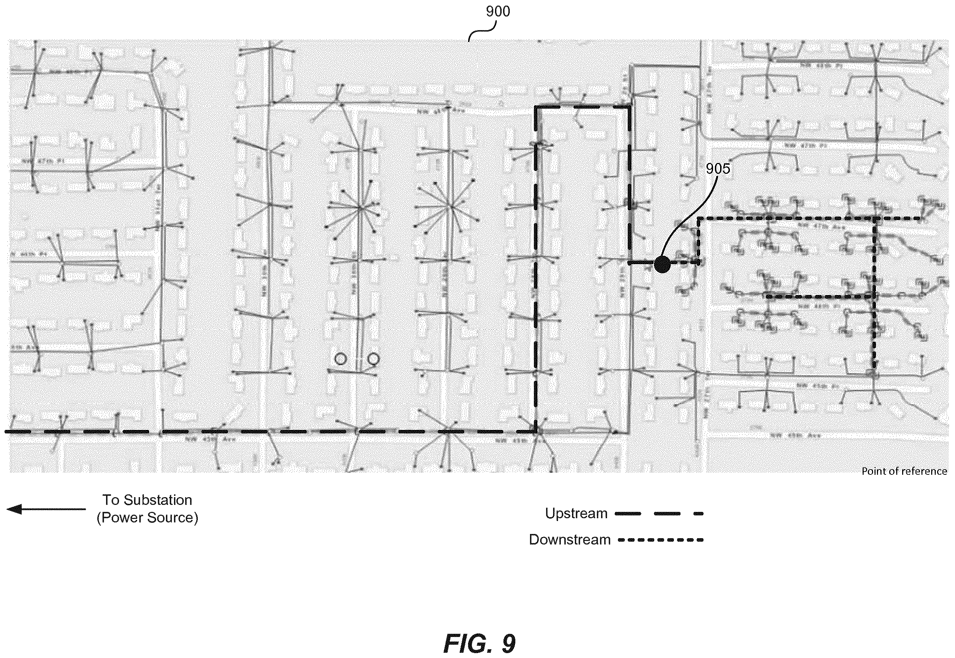

**FIG. 9** is a graphical diagram illustrating a portion of an electric distribution circuit with tracing results showing objects that are upstream and downstream from a point of selection. As depicted, with the tracing function turned on, when a user hovers over (or clicks or taps or otherwise selects) a point (e.g., point 905) on the map 900, the tracing module 445 of the disclosed system uses the network model data stored in the cache memory to identify the upstream objects and the downstream objects relative to the location of the point 905. The rendering engine 450 then displays the path from a substation (not shown) that is the source of power in a distribution feeder circuit, highlighting the upstream objects in one color or style (e.g., light blue color) and all the downstream objects in another color or style (e.g., red color). When the user selects another point on the distribution feeder circuit, the tracing module 445 and the rendering engine 450 respond instantaneously to identify and display all the objects upstream of that point, and all the objects downstream of that point. The response is instantaneous, with no perceivable latency, because the network model data is mostly or entirely precalculated, and localized, which eliminates the need for sending out network queries to the GIS each time a new point on the map is selected for tracing.

### 4. Network Design Validation

In some embodiments, the disclosed system can provide validation of and feedback on network configuration changes in real time or near real-time to help users make an informed decision regarding, for example, placement or configuration of components in a network design. The real-time validation and feedback on the network configuration changes are enabled by a network modeling construct whereby the disclosed system works against a locally stored (e.g., in-memory) model of the network (so called "geospatial network model" or "network model" described above) instead of the GIS (Geographic Information System) database model.

In some embodiments, the real-time validation of network configuration changes against the network model that is stored in a local storage (e.g., cache memory) in a client device is based on validation rules that are also locally stored on the client device. In some embodiments, the process of validating the network configuration changes can include performing various network analyses and/or engineering calculations. In some embodiments, network analyses and/or engineering calculations can be performed outside of the validation process. The types of analyses and calculations to be performed depend on the distribution network in question. Some examples of network analyses include gas pressure flow analysis, electric load flow analysis, short-circuit analysis (e.g., calculating fault currents or short circuit currents), and/or the like.

Consider for example an electric distribution network. In order to validate network configuration changes in the network, the disclosed system can calculate current and voltage through various components impacted by the network configuration changes. The result of such calculations along with the requirements specified by the validation rules can be used by the disclosed system to detect any overcurrent/undervoltage conditions caused by the network configuration changes. The disclosed system can then present on a user interface, interactive feedback on the detected validation issues. The interactive feedback can be presented in a geospatial and/or schematic views of the network. In some implementations, the validation issues, including detail information about the issue, can be populated in an aggregated list. The user can navigate to the location of any validation issue directly from the aggregated list.

With both the network model and the validation rules available locally in the client device, queries and calculations against the network model can be performed by the disclosed system at a much faster speed than previously possible. To the end user, the feedback on each change to the network configuration within the design environment can appear instantaneously, and can help the user make an informed decision on the placement or configuration of the subsequent components in a network. Without the rapid feedback, the user may end up creating or editing a large segment of a network that does not meet the specification. This can lead to waste of significant amount of time and effort. Moreover, the disclosed system in some embodiments can enable various engineering calculations to be performed in real time during the design process using the design application. The integration of engineering calculation tools in the design environment eliminates the need to use separate engineering calculation applications, and streamlines the process of creating and editing networks.

By way of example, consider a geospatial view of an electric distribution circuit. As soon as a user interacts with the geospatial view to add an object (e.g., a service point) to the circuit, the disclosed system can calculate the effect of the addition of the service point on other devices whose performance is sensitive to the total load. If any of the devices become overloaded as a result of the newly added service point, the disclosed system can immediately flag the issue and identify the impacted devices. In some embodiments, the disclosed system can also recommend adjustments to resolve the issue. By way of another example, a user may move a pole in a network design, and as soon as the change is detected, the disclosed system can increase the length of conductor segments, analyze the resulting voltage drop against standards and recommend changes to the network as needed (e.g., increasing conductor diameter) to bring the network back into compliance with standard. All of these analyses and validations can be performed by the disclosed system client-side, without querying the GIS database model. As a result, the disclosed system eliminates the need to send/receive data to/from a GIS database each time a user makes changes to a network design. In fact, with the disclosed system, there is no need to maintain connectivity to the GIS database at all. This has the advantage of improving the performance of the design application as well the user experience with the application, and making the network design process more efficient.

**FIG.10** is a block diagram illustrating example components of a smart network design application or system in accordance with some embodiments of the disclosed system.

In some embodiments, the disclosed system resides in a client device (e.g., client device 105) and comprises a distribution network modeling engine 415 having an undirected graphing module 420, a directed graphing module 425, and/or a mapping module 430, a rendering engine 450, a network configuration change detector 1060, and a network analysis module 440 having a tracing module 445, a validation engine 1050, and/or a power calculation engine 1055. In some embodiments, various data utilized by the components of the disclosed system and/or generated by the disclosed system including, for example, network model data 455, validation rules 1085, power calculation data 1090 and validation results 1095 can be stored in a local storage in the client device. The disclosed system via one or more of these components can handle rapid updates to network configurations and perform validation calculations from those changes. Some embodiments of the disclosed system can include more or less components. Some of these components have been previously described in the context of **FIG. 4****.** The rest of the components will now be described in detail.

The network model generated by the distribution network modeling engine 415 supports various operations such as visualization, analysis (e.g., tracing, load flow analysis, operating voltage calculations) and/or editing on a distribution network. The network modeling engine 415, via the undirected graphing module 420, the directed graphing module 425 and/or the mapping module 430, can transform GIS feature data obtained from a GIS database (e.g., GIS database 130 described in reference to **FIG.1****)** into a specialized data structure that can be utilized by the network analysis module 440 to perform various network analyses on the network.

In some embodiments, the network configuration change detector 1060 can detect changes to configuration of a network. Network configuration changes that the network change detector 1060 can detect can include, but are not limited to: changes in network topology (e.g., adding, deleting, moving, and/or swapping components or features) and changes in component configuration (e.g., changing diameter of a pipe, changing kVA rating of a transformer). The network change detector 1060 can notify the network analysis module 440 and/or the rendering engine 450 when any network configuration changes are detected.

In some embodiments, the network analysis module 440, via its components, can perform various network analyses on distribution networks. In some embodiments, the validation engine 1050 listens for network configuration changes as a user builds out a network (e.g., via network configuration change detector 1060) to inspect the network for invalid network configurations that do not meet requirements and/or standards specified by validation rules 1085 that are stored in a local storage. The validation rules can target specific issues such as insufficient signal strength and powering overcurrent and undervoltage, depending on the type of distribution network. The validation rules can be configured and extended to target the specific requirements of a user and/or organization.

By way of example, consider a Radio Frequency (RF) network design. One way to validate the RF network design is to traverse the network from its signal source to all downstream components. The network traversal requires many iterations over the adjacency list. Starting with the signal source vertex, one approach to performing this traversal is to read the adjacent (downstream) components, push the non-visited, adjacent vertex identifiers onto a stack, pop the next vertex identifier off this stack, perform the necessary operations with the current vertex, push the adjacent vertices onto the stack, and continue this loop until no items remain on the stack to visit.

Some network configuration changes have far reaching impacts on various aspects of the network. For example, in the case of a RF network design, network configuration changes can impact RF signals and component powering. While some network evaluation optimizations may be possible, most network changes to topology or component configuration can involve the validation engine 1050 evaluating all components on a leg off a node or even the entirety of the network connected to a common node against RF network validation rules. In some embodiments, the validation engine 1050, via the power calculation engine 1055, can reevaluate all powering rules on the common power network fed by a power supply in the event any change impacting network topology or internal powering configuration is detected (e.g., by the network configuration change detector 1060).

Before validation of component powering can be performed, the power calculation engine 1055 can calculate the voltage and current through each component of the RF network. In some instances, to resolve these values the entire network powered by a power supply can be determined. While power delivered to the active components of an RF network is delivered along the same cables providing the RF signals to and from the optical node, the power network does not typically have the same topology as the RF network. The powering network for a component may span multiple node boundaries through the use of power inserters and coax cable that bridge networks to reduce the number of power supplies necessary to drive a Hybrid fiber-coax (HFC) network. Likewise, a single RF network may have sections powered by power supplies bridged from other node boundaries. The power calculation engine 1055 can calculate the current and voltages through components by determining the logical, hierarchical powering network fed by a power source. The determination can include locating a power supply and using the RF network graph (e.g., directed graph) to determine the components connected to this power supply. Further traversal downstream from a component can mean deeper inspection of a component's internal configuration by the power calculation engine 1055 to determine which ports can supply power and which have had an internal fuse pulled thereby blocking power through a port. Once the power network has been determined, the power supply specifications can be referenced to find the operating voltage of the power supply. The entire power network can be set at this operating voltage and then an iterative algorithm can be used to evaluate the current draw and resultant voltage in and out of each component until the total current draw residual at the power supply is within a predefined margin. For cables, the voltage drop can be determined by the cable length, resistance per length, and current draw through the cable. Active components use switching power supplies to pull a relatively constant power - as input voltage drops the current draw will increase. This current to voltage profile can be defined within the catalog specification for a given active component. These properties for cables and active components can be used in each step of the iterative algorithm. After voltages and current draws are calculated they are held by the power calculation engine 1055 in an immutable data structure (e.g., as power calculations data 1090 in a local storage) and may be looked up by the validation engine 1050 to evaluate against the power validation rules to ensure the voltage input into active components is at or above minimum requirements and total current passing through any component is below the component's operating amperage rating. In some embodiments, the power calculation data can also be accessed by the rendering engine 450 for feedback in a user interface (UI) of the disclosed system.

In the case of an electric distribution circuit, when load is added downstream of a component, that load can augment the load on all the conductors upstream of the component all the way back to the circuit source. In some embodiments, the power calculation engine 1055 can perform a load flow analysis to determine the amount of current flowing through the conductors. Based on the calculated current and applicable validation rules, the validation engine 1050 can determine if any of the conductors are too small in size. The validation engine 1050 can then provide feedback indicating that the conductors are carrying excess load. Similarly, adding load anywhere on the feeder can bring voltages down almost everywhere downstream. The validation engine 1050 and the power calculation engine 1055 can together determine if the additional load causes the voltage at the component to drop below a minimum threshold, typically set by the utilities.

The validation engine 1050 can store the results from the validation for notification and/or other purposes. In some embodiments, the validation engine 1050 can capture each violation in a validation result object to provide a user-friendly message about the issue, severity, and information about the components in violation. The collection of validation result objects can be used to provide a list of issues to be addressed in the design. In some embodiments, the violations can be presented in the geographic and schematic views of the network (e.g., rendered by the rendering engine 450). The validation results 1095 can be stored in a local storage in some embodiments.

In some embodiments, the disclosed system allows real-time analysis and calculations to be performed on a network design even as the network design is being modified. This functionality is enabled by the distribution network modeling engine 415 that creates new data structures to represent the states of the network as modifications are made to a network design. For example, consider a network design that is being edited by a user. The current state of the network design is represented by a data structure, but the state of the network design after the modification is represented by a new data structure. With this approach, one thread can traverse the network to perform a network analysis, while another thread can perform a component swap on that same network to create a new data structure without changing the state of the network that the first thread is referencing. The multi-threaded approach utilized by the disclosed system improves the application performance, making it real-time or near real-time.

In some embodiments, the new data structure is generated by transforming the old data structure in such a way that the new data structure comprises of vertices that changed and reference points to vertices that did not change. By creating the new data structures to include reference points to the old data structure, the disclosed system can reduce the memory cost of storing and tracking the various states of a network design. Moreover, by taking into account the information that typically changes as a group, one group can be separated from another to reduce the number of new data structures that need to be instantiated during the lifetime of the network design. The memory savings described herein can be achieved using Microsoft .NET's Immutable Collections library in some embodiments.

In some embodiments, the network model data 455, power calculations data 1090, validation results 1095, and/or other application data can be periodically uploaded to the host server 125 and/or another cloud repository for back up or other purposes.

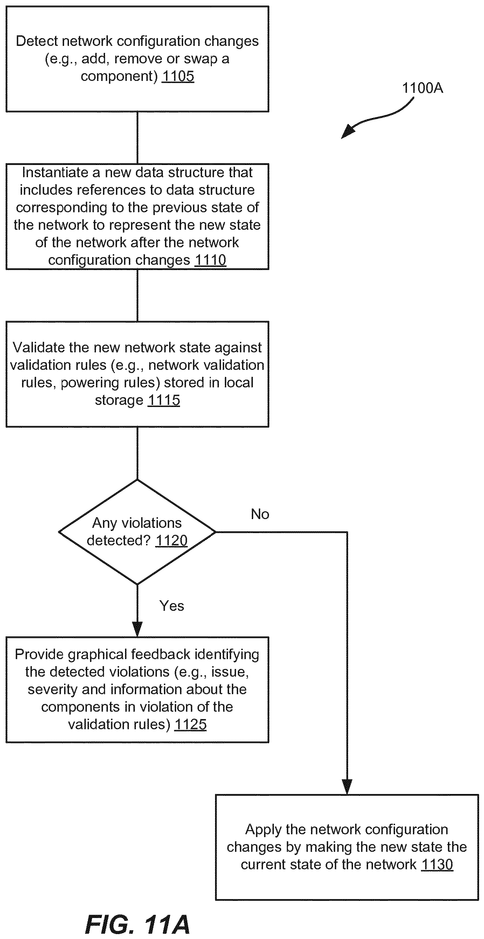

**FIG. 11A** is a logic flow diagram illustrating an example method of validating network configuration changes in client environment in accordance with some embodiments of the disclosed system.

At block 1105, the disclosed system (e.g., via network configuration change detector 1060 and/or validation engine 1050) can detect network configuration changes. Network configuration changes can include, for example, addition, removal, moving or swapping of one or more components in a network design. The network configuration changes can also include changing of any component's internal configurations. At block 1110, the disclosed system (e.g., via the network modeling engine 415) instantiates a new data structure to represent the state of the network after the network configuration changes. In some embodiments, the new data structure has a smaller memory footprint compared to the data structure corresponding to the original state of the network when it was loaded. The new data structure does not include the complete set of objects in the network. Instead, the new data structure includes only the objects that changed, and references the rest of the objects by pointing to the data structure corresponding to the previous state of the network.

At block 1115, the disclosed system (e.g., via the validation engine 1050) validates the new network state against validation rules (e.g., validation rules 1085) stored in a local storage. The validation rules can include network validation rules, powering rules and/or the like. In some embodiments, the local storage can include a cache memory. If any violations of the validation rules are detected at decision block 1120, the disclosed system provides graphical feedback identifying the detected violations at block 1125. In some embodiments, the graphical feedback can provide an indication of the issue, severity, information about the components in violation of the validation rules, and/or the like. In some other embodiments, the graphical feedback can include recommendations for remedying the violations. If no violations of the validation rules are detected, the disclosed system applies the network configuration changes, making the new state the current state of the network at block 1130.

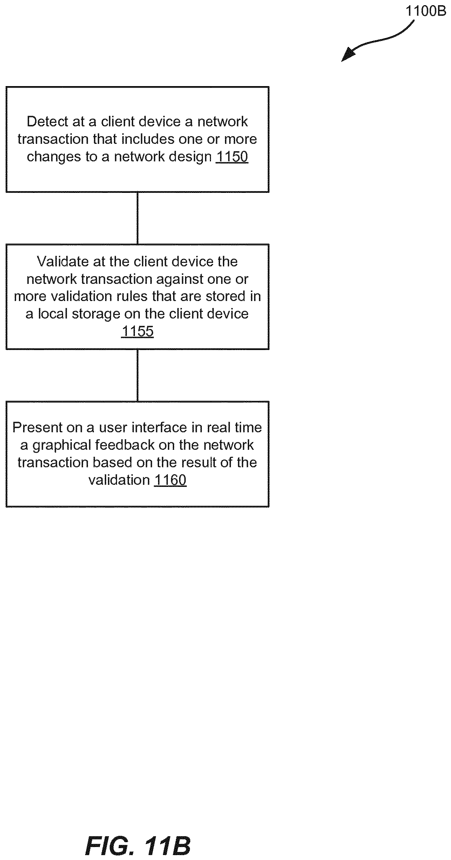

**FIG. 11B** is a logic flow diagram illustrating an example method of providing a graphical feedback on a network transaction in real time in accordance with some embodiments of the disclosed system.

The example method 1100B starts with the disclosed system detecting at a client device a network transaction that includes one or more changes to a network design at block 1150. The network transaction can include, for example, adding, removing, swapping or moving components in the network design and changing internal configuration of one or more components. At block 1155, the disclosed system validates at the client device the network transaction against one or more validation rules that are stored in a local storage on the client device. The validation rules can be rules pre-selected or pre-defined for the network design. Upon validation one or more issues or errors can be detected if the one or more changes violate the one or more validation rules. At block 1160, the disclosed system provides in real time a graphical feedback on the network transaction based on the result of the validation. For example, if the validation result includes one or more errors or issues, the disclosed system displays those errors within the design environment (e.g., in the geospatial view, schematic view) for the user to see and/or select to navigate to the location of those errors. In some instances, the graphical feedback can include information on how to remedy the errors.

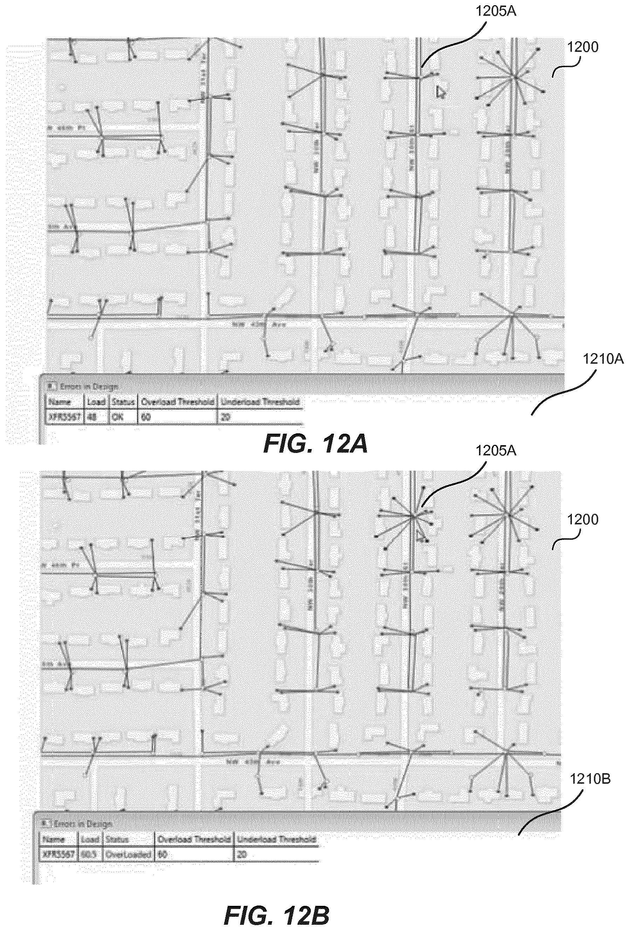

**FIG. 12A** and **12B** are schematic diagrams illustrating graphical feedback displayed in response to a network configuration change in accordance with some embodiments of the disclosed system.

Referring to **FIG. 12A****,** the geoschematic view 1200 corresponds to an electric distribution network and depicts a cursor near a transformer object 1205A that is connected to four service points. The disclosed system determines that the service points are downstream of the transformer 1205A based on the network model that is stored locally, and calculates the load on the transformer 1205A by adding up estimated load for each of the four service points that are fed by the transformer 1205A. The disclosed system then displays, in apparent real time, the resulting load on the transformer 1205A (48 kVA in this instance), along with other information such as the name, status, overload threshold and underload threshold on a pop up window 1210A or a validation details list (not shown). A user can navigate to the location of the issue or error directly from the pop up window or validation details list. Thus, the disclosed system can immediately present information about network objects that can help a user make design decisions. For example, by presenting information that the transformer 1205A load is below the overload threshold, the user can consider whether to accommodate additional service points downstream of the transformer 1205A.

Referring to **FIG. 12B****,** the user decides to add additional service points to the transformer 1205A. The user edits the network by adding six additional service points to the transformer 1205A. Addition of these service points causes the system to recalculate the load on the transformer 1205A. As depicted in the pop up window 1210B, the load downstream of the transformer 1205A is recalculated to be 60.5 kVA. Based on the validation rules, the disclosed system determines that the addition of the six service points violates the overload threshold of 60 kVA and indicates the violation by displaying the status as "overloaded." In this manner, the disclosed system can provide immediate graphical feedback on decisions made by the user, which helps to streamline the network design process by saving on time and effort.

When load is added downstream of a component, that load can augment the load on all the conductors upstream of the component all the way back to the circuit source. In some embodiments, the disclosed system can perform a load flow analysis to determine the amount of current flowing through the conductors. Based on the calculated current and applicable validation rules, the disclosed system can determine if any of the conductors are too small in size. The disclosed system can then provide feedback indicating that the conductors are carrying too much load. Similarly, adding load anywhere on the feeder can bring voltages down almost everywhere downstream. The disclosed system can determine if the additional load causes the voltage at the component to drop below a minimum threshold (typically utilities require the voltage to be within 5% of 120V at the consumer location).

### 5. Syncing and Merging Network Changes to a Distribution Network

In some embodiments, the disclosed system tracks a sequence of updates or changes made to a distribution network design as a result of design changes to build a stack of network states, with each network state providing a snapshot of the network design at a point in time. The disclosed system can then leverage this stack to go back and forth between network states to undo or redo changes to the network design. The redo/undo functionality allows users of the design application to explore design alternatives in a fast and efficient manner without having to communicate with the GIS database. The redo/undo functionality also prevents a mistake in the network design from costing a user more time and effort and slowing down the design process.

In some embodiments, the disclosed system utilizes a command based design building technique to maintain for each network design a series of actions or steps (i.e., commands) required to get to a particular design state (i.e., state of a network design) rather than the result of those actions. The disclosed system can then use the commands that capture modifications to a network design to perform a command-based network merge that is better able to handle possible conflicts than data centric merge based on actual differences between the network designs. For example, consider a network extension design in a coaxial cable communication network that feeds a proposed office building. The network that was to supply the extension design is scheduled for an upgrade from an 862 MHz to a 1 GHz system. The existing network design may have a few components moved or swapped out. When the office building extension is ready to move forward, a merge of this design into the upgraded network needs to be performed. If only the data differences are considered, the merging can result in a number of conflicts that will require a designer's time and effort to rectify. Perhaps the design of the extension assumed an additional tap could be connected to the downstream port of an existing tap to supply the new building. The upgrade project may have required the cable along this stretch of the network to be replaced with a higher diameter cable and the taps swapped for a higher tap value. Merging using the creation, deletion, and modifications of entities and property values would throw a merge conflict stating that the assumed cable and tap to be re-connected into the new tap could not be found. This may be because the identifiers and properties of these entities would have changed during the upgrade. A designer could explain how the designs should be combined but that would be inefficient requiring a lot of time and effort from the designer to rectify each of the conflicts. In some cases, custom logic could be created to rectify this particular type of merge conflict by looking beyond the raw data, but the combinations and permutations of possible conflicts in merged designs could be staggering, making such custom logic overly complex. The disclosed system, in some embodiments, can capture the extension design in terms of commands expressing modifications to the network topology and perform a merge in a way that reduces or completely eliminates conflicts for many types of network changes. For example, the command to insert a tap may include information that a tap needs to be inserted on the first downstream port of the first component installed on the pole at a location near the office building location. Since the command describes the operation to be performed in terms of the network topology, the disclosed system can execute the command against the upgraded network to overcome the discrepancies in state with the original network.

In some embodiments, maintaining a stack of network states enables one or more operations to be performed within the bounds of a transaction. The disclosed system, in some embodiments, while holding a reference to an existing (immutable) network state, can execute a number of operations within the context of a transaction to create a new (immutable) network state. If an operation within the transaction cannot be completed or would create an invalid network state, the disclosed system can prevent the entire transaction from getting applied and potentially corrupting the design by holding constant the reference to the existing network state and not rolling forward to the new network state. From the view of the rest of the system, it would appear that the commands of the transaction were never executed. In some embodiments, this technique can be utilized when importing and merging networks to reduce the likelihood of conflicts.

In some embodiments, the disclosed system is capable of bidirectional synchronization (sync) with the GIS. For example, the disclosed system can fetch GIS feature data from the GIS, and transform the feature data into a network model that facilitates visualization, editing and/or analysis of the network. The disclosed system can also, in some embodiments, push network data (e.g., design work) back into the GIS. The disclosed system can thus complete the design life cycle by returning the design work back to the GIS which is typically the operational and asset management data source of an enterprise. In order to write the design information back to GIS, the disclosed system can use various techniques to interpret the design work, and reconcile and merge changes made within the design environment with the design work stored in the GIS. In some embodiments, the disclosed system can utilize the network model construct (NMC) architecture in combination with command based design building technique described above to update the GIS with network data corresponding to network design changes.

In some embodiments, the disclosed system utilizes a novel design storage methodology to significantly reduce the memory and storage footprint of network information, which in turn enables efficient and rapid sharing of network designs with the GIS and/or any other devices and/or systems (e.g., with other client devices). The novel design storage methodology providing network data storage and transfer efficiencies includes replacing one or more branches of a network with one or more artificial nodes which stores relevant upstream or downstream information. The upstream/downstream information stored in the artificial nodes can then be used to derive relevant network information for calculations and/or analyses.

In some embodiments, the disclosed system enables disconnected network editing. For example, the disclosed system can enable a user to use the design application to make changes to a network configuration in field settings where connection to a communication network may not be available. The disconnected network editing is enabled by the NMC which delivers a local model to the design environment, thereby eliminating intensive data replication and queries to the GIS and waiting for responses back from the GIS. Automated syncing of design information and the novel design storage methodology further enables efficient and rapid syncing of the design once connectivity with the GIS is re-established.

In some embodiments, the disclosed system applies a technique of branching revision history to manage alternate designs for distribution network facilities captured as a sequence of commands that alter the state of the system under design. Each such design is typically the product of a significant amount of labor, and as such, by preserving these alternate designs, the disclosed system enables evaluations and comparisons of design alternatives and facilitates selection of a design alternative that best meets any given requirements.

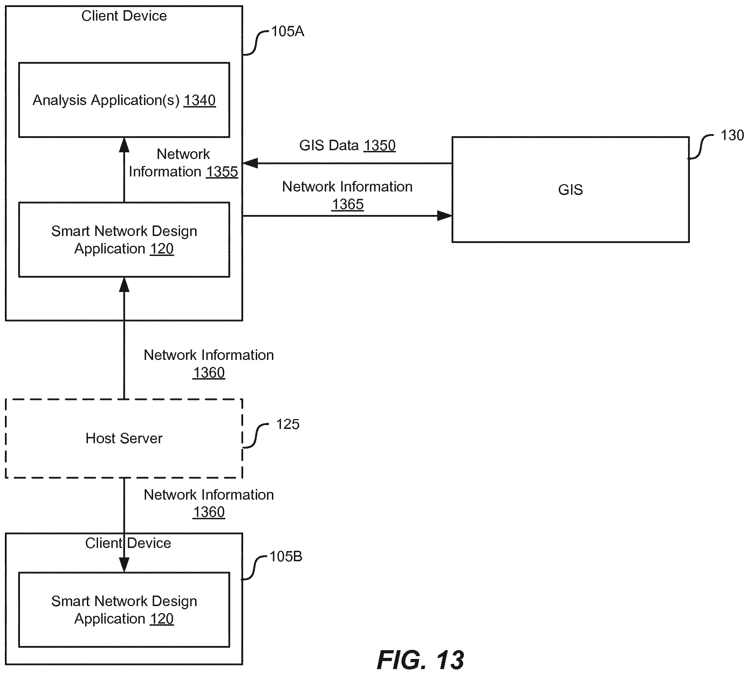

**FIG. 13** is a block diagram illustrating flow of network information between client devices, and between a client device and the GIS in accordance with some embodiments of the disclosed system.

The disclosed system, in some embodiments, can update the GIS 130 with network information so that changes made to a network design outside of the GIS 130 can be applied to or reconciled with the network design in the GIS 130. Syncing network design changes with the GIS 130 enables the GIS 130 to remain the primary repository for network designs. Consider, for example, a user who utilizes a design application 120 executing on a client device 105A to make changes to a network design. The disclosed system typically utilizes a local model for the network generated from GIS data 1350 obtained from the GIS 130 to enable the user to make changes to the network design. The disclosed system records the edit operations performed by the user in the form of commands, which decouple the intent of the operations from the targets of those operations. Once edits to the network have been completed, the design application 120 determines the difference between the state of the network as it was loaded from the GIS 130 and the state of the network after all the commands were applied. The difference constitutes the updates 1365 made to the network outside of the GIS 130, which is transferred by the design application 120 to the GIS 130 utilizing an API, for example. In some embodiments, the updates 1365 can be formatted or otherwise manipulated to conform to a schema that is easily ingestible by the GIS 130 (e.g., formatted using XML, JSON, or the like).

In some embodiments, the disclosed system can communicate network information to other client devices and/or systems. For example, the design application 120 executing in a client device 105A can share a network design with the design application 120 executing on a client device 105B, directly or through a host server 125. The communication of the network information 1360 between the client devices (or between a client device and a host server) can be performed efficiently and rapidly by using a hypernode construct to encapsulate network information from a portion of a network that was not modified or referenced in an artificial node, which reduces the amount of data to be stored and/or shared.

In some embodiments, the disclosed system enables a network design to be sent from the design application 120 directly to an analysis application 1340 executing on the client device 105A to run simulations, advanced engineering calculations, and/or the like that may be beyond the scope of the design application 120. In existing systems, users can import network designs into an analysis application 1340 from the GIS 130 only after performing a rigorous data validation in the GIS. However, the data validation still does not guarantee acceptance of the network design by the analysis application. The disclosed system on the other hand can bypass the GIS 130 and enable network designs to be sent from the design application 120 directly to the analysis application 1340 without the use of intermediate files (i.e., spreadsheets, comma delimited text file, etc.) which may require additional validation steps to ensure compatibility with the analysis application before analysis can be performed. Utilizing the data directly from the design application 120 eliminates the need for this additional validation as the validation rules within the design application are sufficient to ensure proper operation of the analysis application. Tighter integration between the design application 120 and other applications such as the analysis application 1340 also has the advantage of enabling advanced analyses to be performed at design time, which can speed up the design process.

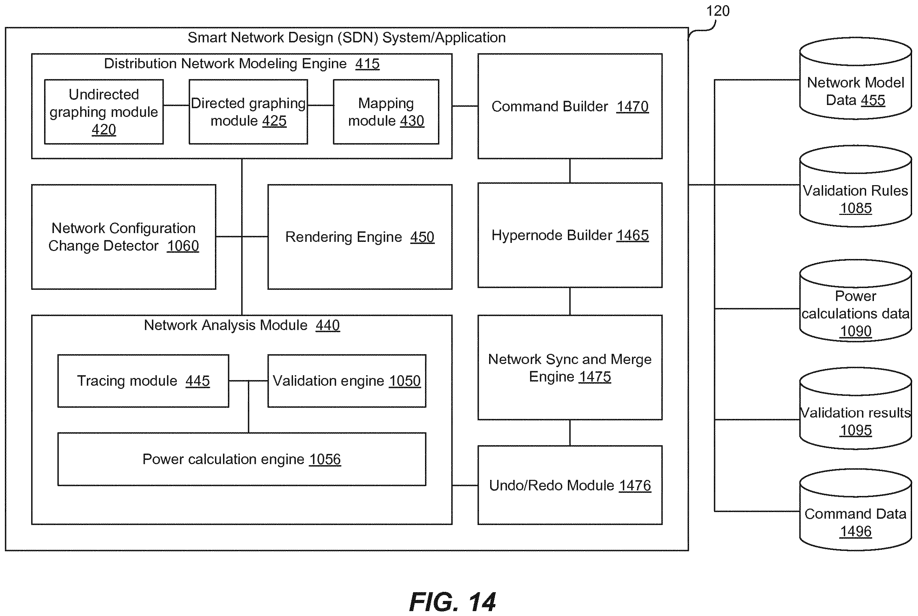

**FIG. 14** is a block diagram illustrating example components of a smart network design application or system in accordance with some embodiments of the disclosed system.

In some embodiments, the disclosed system resides in a client device (e.g., client device 105) and comprises a distribution network model engine 415 having an undirected graphing module 420, a directed graphing module 425 and a mapping module 430, a network analysis module 440 having a tracing module 445, a validation engine 1050, and a power calculation engine 1055, a rendering engine 450, a network configuration change detector 1060, a command builder 1470, a hypernode builder 1465, a network sync and merge engine 1475, and an undo/redo module 1476. Various embodiments of the disclosed system may include more or less components. Similarly, in various embodiments, one or more components can be consolidated together into a single component. In some embodiments, various data utilized or generated by the disclosed system can be stored in a local storage (e.g., cache memory) in the client device. Examples of data stored in the local storage can include network model data 455, validation rules 1085, power calculation data 1090, validation results 1095 and command data 1096, among others. Some of these components have been previously described in the context of **FIGS. 4** **and** **10****.** The rest of the components will now be described in detail.

In some embodiments, the command builder 1470 can receive information about one or more operations performed on a network design to change its configuration from the network configuration change detector 1060. The command builder 1470 can then build a command from the one or more operations to modify the network, encapsulating necessary information to perform the one or more operations, so that the command can be executed at a later point in time or against a different version of the network with the same effect. The command builder 1470 can record the commands corresponding to operations performed on the network to modify the network or change the configuration of components in the network (i.e., network operations) serially in a data file in some embodiments. For example, the commands can be serialized in an XML, JSON or another suitable file or format. The command data 1496 can be stored in a local storage on the client device.

In some embodiments, the set of data structures representing the various states of a network as modifications are made to the design of the network, and the sequence in which those data structures are created can be tracked and utilized by the network modeling engine 415 to build a stack of snapshots of the network. Each snapshot of the network can thus provide information about the configuration of the network at a particular point in time. Using this stack, the undo/redo module 1476 can execute "undo" and "redo" commands to switch between network states.

The hypernode builder 1465 represents a branch of a network truncated by an extraction area as a single node to store network information more efficiently. In the electrical domain, such a branch may include network assets that are not going to be modified or referenced as part of editing work in the extracted area, but may include feeder information that may be needed for deriving feeder properties such as phase load for network analysis. Thus the hypernode can store relevant upstream information efficiently, which can improve application performance and also facilitate faster sharing of network information with other client devices and/or systems.

In some embodiments, the network sync and merge engine 1475 can synchronize ("sync") updates made to a network design outside of the GIS 130 (e.g., in the design environment of the design application 120 executing on a client device 105) to the GIS 130. The network sync and merge engine 1475 can access a first state of the network as it was loaded from the GIS 130 from a local storage on the client device. The first state of the network thus corresponds to the state of the network in the GIS 130. The network sync and merge engine 1475 can also access a second state of the network from the local storage on the client device. The second state of the network can be the state of the network resulting from operations performed on the network. The network sync and merge engine 1475 can then compare the second state of the network to the first state of the network to determine updates to the networks. In some embodiments, the network sync and merge engine 1475 can transform the updates into a data structure that is easily ingestible by the GIS 130 (e.g., by applying a pre-defined schema). The network sync and merge engine 1475 can then send the updates to the network to the GIS 130 to update the current state of the network in the GIS to a new state so that the new state is synced to the state of the network in the client device.

In some embodiments, the network sync and merge engine 1475 can also merge two or more network designs into a single design. For example, the network sync and merge engine 1475 can reconcile changes made to the same area or different areas of the network at different locations (e.g., different devices), or at different points in time based on commands. The command builder 1470 can transform operations performed to modify topology of a network into a set of commands. The network sync and merge engine 1475 can then execute the set of commands or a subset thereof against another network to merge the two networks. The network sync and merge engine 1475 can also compare network designs and automatically resolve conflicts that may arise from the merging in some instances.

In some embodiments, the network model data 455, power calculations data 1090, validation results 1095, command data 1496 and/or other application data stored in a local storage on the client device can be periodically uploaded to the host server 125 and/or another cloud repository for back up or other purposes. In some embodiments, all operations performed on a network design can be performed within the context of a workspace. As such, in some embodiments, the disclosed system can instantiate multiple workspaces to allow multiple network designs to be open (e.g., for viewing, editing, etc.) at the same time.

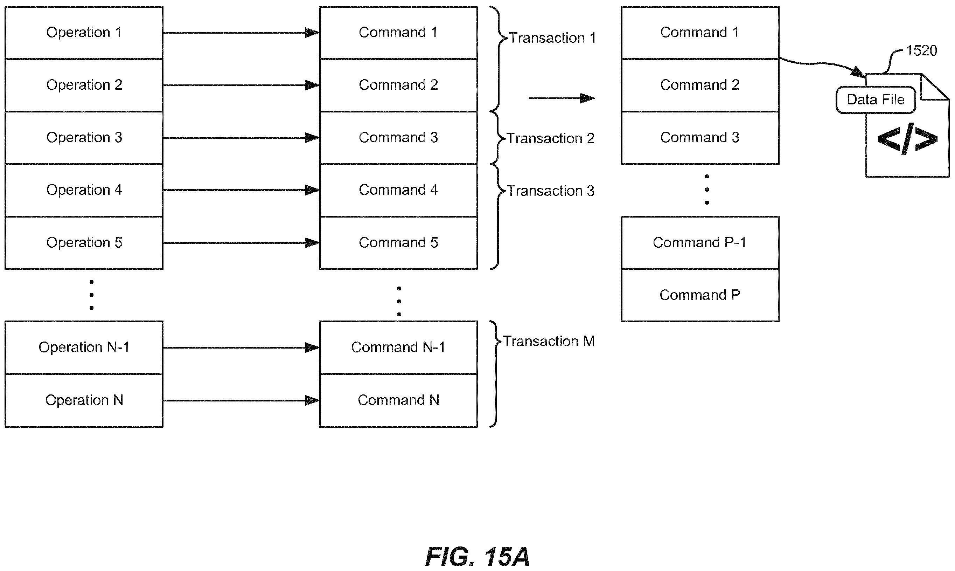

**FIG. 15A** is a block diagram illustrating command building in some embodiments of the disclosed system. In some embodiments, any operation to modify a network or component configurations can be performed as part of a command. As disclosed above, a command encapsulates the necessary information to perform an operation on a network so that the operation can be executed at a later point in time or on a network having a different state. A command thus decouples the intent of an operation from the target of that operation. Referring to **FIG. 15A****,** a user performs operations 1-N on a network. The disclosed system captures these operations as commands 1-N. In some embodiments, some of the commands can be consolidated or combined to create a composite command. So, the disclosed system can reduce the commands 1-N to commands 1-P, where N is greater than P. This technique reduces the complexity of individual commands while permitting greater reuse of a single command. Moreover, rich behavior can be achieved by aggregating several basic commands together. The original set of commands 1-N or the reduced set of commands 1-P can then be stored in a serialized fashion in a data file 1520 (e.g., in a file using a structured data format such as XML, JSON).

By way of an example, consider a scenario where a designer updates a network design by adding a transformer, a conductor and a service point. The disclosed system (e.g., via the command builder 1470) translates these changes into a sequence of commands: command 1: create a transformer with certain properties, command 2: create a conductor with a set of spatial properties and attributes, and command 3: create a service point which can be stored in a serialized fashion in a data file using a structured data format (e.g., data file 1520). The disclosed system (e.g., via the sync and merge engine 1475) can detect commands 1-3 as updates made to the network design and transmit one or more data packets including these commands to the GIS 130 to request the GIS to update its content. An example of such an update message to the GIS 130 formatted using JSON (JavaScript Object Notation) and encapsulating a command for creating a conductor having a set of properties and attributes can be as follows:

```
 {
 "id": 19,
 "adds": [{
   "geometry": {
    "paths": [[
      [-9168447.1440486275, 3460855.09226354],
      [-9168407.3288516812, 3460872.1559193744]]],
    "spatialReference": {
      "wkid": 102100,
      "latestWkid": 3857
    }
   },
   "attributes": {
    "NEUTRALSPECID": "{1E6A0573-7C37-48B6-BA12-15BA3FD14A08}",
    "SPACINGSPECID": "{5277B5D7-33FE-4CB3-B622-4065B0896E2A}",
    "MEASUREDLENGTH": 0.43105229381131943,
    "MMELECTRICTRACEWEIGHT": 0,
    "SPECID": "{AB014786-52A7-4797-B8E5-ADEFFC2D0CCD}",
    "SUBTYPE": 1,
    "CONDUCTORSlZE": "4/0",
    "CONDUCTORMATERIAL": "ACSR",
    "PHASEDESIGNATION": 4,
    "Facilityld": "CONDB4DF2",
    "WORKFLOWSTATUS": null,
    "WORKFUNCTION": null,
    "WORKREQUESTID": null,
    "DESIGNID": null,
    "WORKLOCATIONID": null
   }
 }],
 "updates": [],
 "deletes": []
 }
```

The example JSON data packet shown above comprises a geometry portion that provides the geographic coordinates of end points of the conductor to be created as well as a set of attributes of the conductor. In some embodiments, the data packet can include an equipment identity (e.g., spec ID or equipment ID) which provides a reference to a model of an object, and encapsulates a set of attributes and engineering data associated with the object. For instance, in the example JSON data packet shown above, the SPECID "AB014786-52A7-4797-B8E5-ADEFFC2D0CCD" is associated with a specific model of a conductor. An application (e.g., application 120 in Figure 1A) consuming the GIS data from the GIS 130 can use this SPECID included in the GIS data to look up supplementary information associated with the conductor. The supplementary information associated with an object can include attributes and engineering data such as impedance per unit length, reactance per unit length, maximum current carrying capacity, temperature tolerance for operation and/or other manufacturer data for the object. The supplementary information can be obtained from an equipment catalog (e.g., 135B in Figure 1A) and/or other data stores. With the supplementary information readily available, the application can perform, in real time or near real time, advanced engineering analysis calculations on the network model that otherwise would have been too time consuming or not possible (e.g., because of lack of availability of some engineering data in the GIS data from the GIS 130).

In some embodiments, the disclosed system can perform one or more operations within the context of a transaction. For example, operations 1 and 2 can be performed together as part of a single transaction on the same reference network state to create a new immutable network state. If an operation that is a part of the transaction cannot be completed or would otherwise create an invalid state, the disclosed system prevents the entire transaction (i.e., operations 1 and 2) from being applied. By keeping the system looking at the existing state and not rolling forward to this new state that is invalid, the disclosed system prevents potential corruption of the design. From the view of the rest of the system it would appear that the commands of the transaction were never executed. This technique can be beneficial during import and network merge scenarios as it helps prevent the network design from reaching an invalid state.

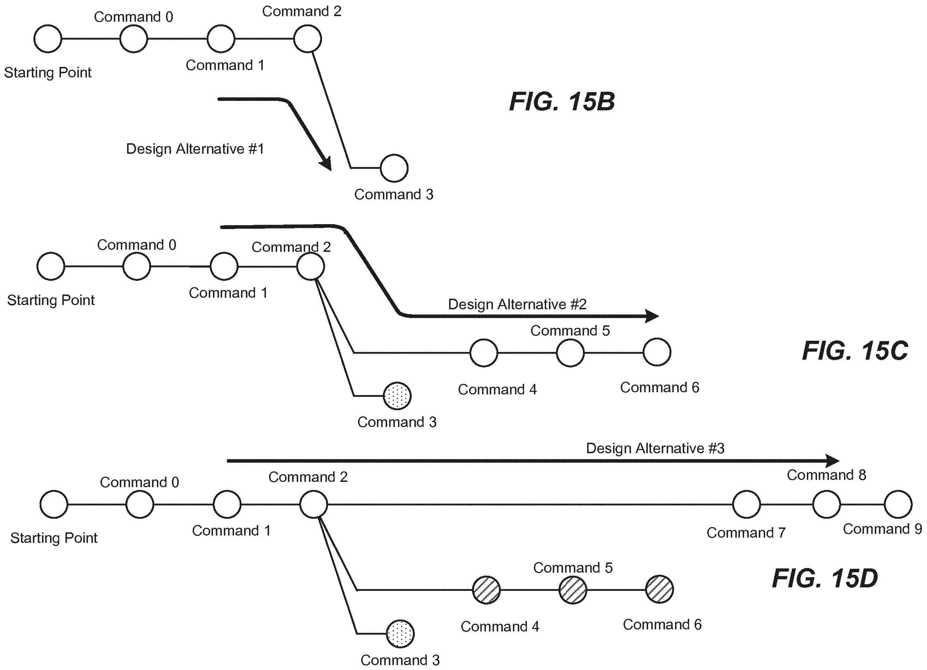

In some embodiments, the disclosed system supports a branching structure in the sequence of commands that lead from one design state to another. This allows the disclosed system to model alternate variations of a given design project that diverge from some point in a shared command history. Each command in this arrangement refers to a single predecessor command and to one or more successor commands. A command that has more than one successor lies at a branching point in the tree structure of commands. From a branching point, two or more branches of command sequences diverge, each branch resulting in a distinct alternative design state that is a complete representation of the system. Consider the example of a design to upgrade electric service to several retail buildings in a commercial district. The design engineer begins by upgrading all of the transformers in place (command 1 and command 2) and then upgrading the secondary and service conductors that bring power from the transformers to the customers (command 3). The application of commands 1 through 3 results in a state labeled as "design alternative #1" which is illustrated in **FIG. 15B****.** But now the engineer realizes that this project presents a unique opportunity to improve electrical performance (e.g., reduce power losses) for a small additional cost, by relocating some of the transformers that are being replaced. So the designer reverts the upgrade of secondary and service conductors by undoing command 3, and then moving three of the transformers via command 4. Command 4 is now a new, alternative successor of command 2. The designer upgrades the secondary and service conductors (command 5) which now requires new routing for some of the conductors (command 6). The foregoing activity results in a branch in the command history, which now has two independent command sequences that follow after command 2. The command sequence (1, 2, 3) leads to design alternative #1, while the command sequence (1, 2, 4, 5, 6) leads to design alternative #2, which is depicted in **FIG. 15C****.** In introducing the new design alternative, the original alternative is not destroyed; the commands that lead to alternative #1 are preserved (e.g., stored in a data file such as data file 1520) and can be replayed at any time in order to bring about the design state corresponding to alternative #1. Not entirely satisfied with alternatives #1 or #2, however, the engineer now reverts to the branching point by undoing commands 4, 5, and 6, and tries out a brand new alternative #3 by moving a different set of three transformers (command 7, which is a new alternative successor of command 2), and upgrading the secondary and service conductors (command 8) and rerouting some of them (command 9) as depicted in **FIG. 15D****.** At this point, the disclosed system provides the design engineer the ability to switch between the three perfectly preserved design alternatives by navigating the branched command structure to move from state to state. This ability makes possible a side by side comparison of competing design ideas, each of which can be examined and evaluated as a complete state of the system and with the help of analysis and validation tools that work with the network model embodied by that state.

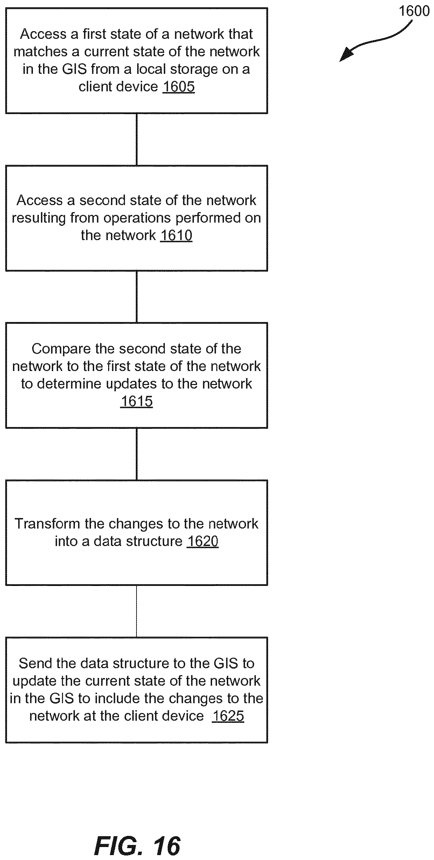

**FIG. 16** is a logic flow diagram illustrating an example method of syncing network changes made to a network in a client device to the GIS in accordance with some embodiments of the disclosed system.

In some embodiments, the disclosed system accesses a first state of a network that matches a current state of the network in the GIS from a local storage on a client device at block 1605. The disclosed system also accesses a second state of the network resulting from operations performed on the network at block 1610. The operations can be captured as commands. The disclosed system then compares the second state of the network to the first state of the network to determine updates or changes to the network at block 1615. In some embodiments, at block 1620, the disclosed system transforms the updates into a data structure having a pre-defined schema. In some embodiments, the schema may be defined by or compatible with the GIS. The disclosed system then sends the updates in the form of data structure having the pre-defined schema to the GIS to update the current state of the network in the GIS to include the updates made to the network outside of the GIS in the design environment at the client device at block 1625.

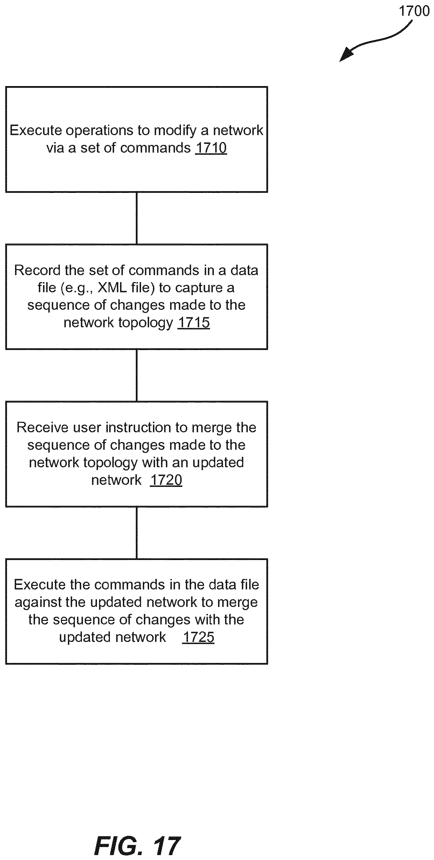

**FIG. 17** is a logic flow diagram illustrating an example method of merging changes made to a network at different points in time or at different sources in accordance with some embodiments of the disclosed system.

At block 1710, the disclosed system performs operations to modify a network via a set of commands. One example of such an operation can be inserting a tap in an electric distribution network. This operation can be captured in terms of a command which expresses modification to the network topology, and does not include direct references. For example, the command can include information that a tap needs to be inserted on the first downstream port of the first component installed on the pole at a location near an office location. At block 1715, the disclosed system records the set of commands in a data file to capture a sequence of changes made to the network topology. In some embodiments, the set of commands can be reduced by consolidating one or more commands into a single command. At block 1720, the disclosed system receives a user instruction to merge the sequence of changes made to the network topology with an updated network. The updated network refers to the same network but including changes that were made elsewhere or at a different point in time. At block 1725, the disclosed system executes the commands in the data file against the updated network to merge the sequence of changes expressed by the commands with the updated network. Since the commands describe the operations to be performed in terms of the network topology, when the commands are executed against the updated network many, if not all of the discrepancies in state with the original network can be overcome, resulting in fewer or no conflicts.

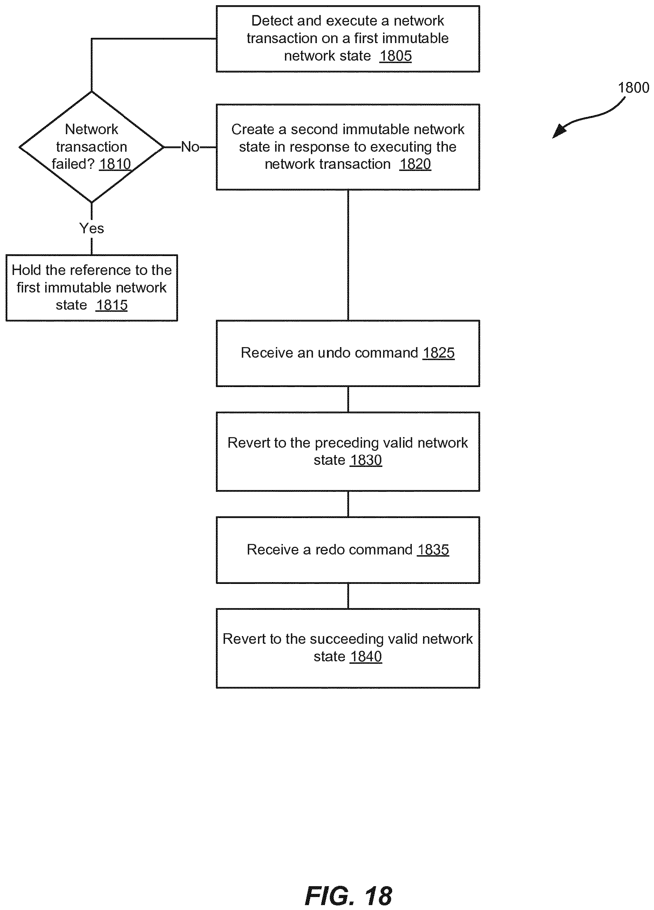

**FIG. 18** is a logic flow diagram illustrating an example method of processing redo and undo commands on a network design in accordance with some embodiments of the disclosed system.

At block 1805, the disclosed system detects and executes a network transaction on a first (immutable) network state. In some embodiments, a network transaction can be a change or a group of similar changes to a network initiated by a user. At block 1810, the disclosed system determines whether the network transaction failed. A network transaction can fail if any one of the changes cannot be applied or causes an invalid network state to be created. If the network transaction failed, the disclosed system holds the reference to the first network state at block 1815. In other words, no new network state is created. If, on the other hand, the network transaction was successfully executed, the disclosed system creates a second (immutable) network state in response to executing the network transaction at block 1820. At block 1825, the disclosed system receives an undo command. In response, the disclosed system reverts to the preceding valid network state at block 1830. In this example, the disclosed system changes the reference from the second network state to the first network state such that if another network transaction were to be detected, the disclosed system would apply that network transaction to the first network state instead of the second network state.

At block 1835, the disclosed system receives a redo command. In response to the redo command, the disclosed system reverts to a valid network state succeeding the current network state at block 1840. In this example, the redo command would cause the current network state to change from the first network state to the second network state. In this manner, the disclosed system can go back and forth between network states in response to undo and redo commands.

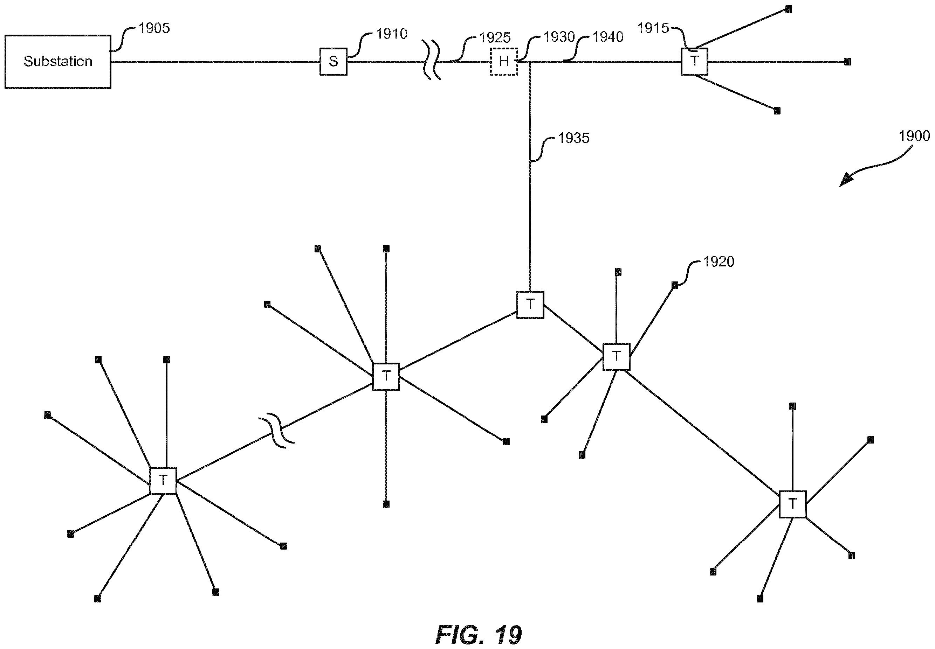

**FIG. 19** is a schematic diagram illustrating a hypernode construct for facilitating efficient storage and transfer of network information.

The distribution circuit 1900 as illustrated depicts a portion of distribution circuit. For example, in addition to the substation 1905, the switch 1910, the transformers 1915 and service points 1920 depicted, the distribution circuit 1900 can include additional branches, service points, transformers, switches, and/or other components. Suppose the area of interest for a user includes the branches 1935 and 1940. Typically, when extracting network information corresponding to an area (e.g., branches 1935 and 1940), the source of a feeder (i.e., substation 1905) is needed to enable calculation of electric connectivity and/or other network analyses or calculations. For example, deriving additional feeder properties such as phase load balance needs information about the entire feeder which increases the size and memory footprint of the data to be extracted in order to take the network design offline for editing in a disconnected state. The disclosed system uses a hypernode construct to reduce the amount of network information to be extracted while including enough information about the feeder to enable any calculations. In the distribution circuit, the hypernode, which is an artificial node is depicted by reference number 1930. As depicted, the hypernode 1930 is inserted where a network edge is truncated by an extraction area (including branches 1935 and 1940) and stores upstream feeder information corresponding to the non-extracted area 1925. The extraction area only needs to include network assets that may be modified or referenced as part of design work and the hypernodes can include relevant upstream information needed to derive properties such as energized feeder and phase load balance for the extracted network.

By utilizing the hypernode construct, the disclosed system eliminates the need to extract the area corresponding to branch 1925 which significantly reduces the amount of network data. In other words, the hypernode construct reduces the size and memory footprint of the network design, which has the advantage of improving the performance of the design environment, and enabling rapid download and sharing of network designs between users and systems.

### 6. Management of GIS Data

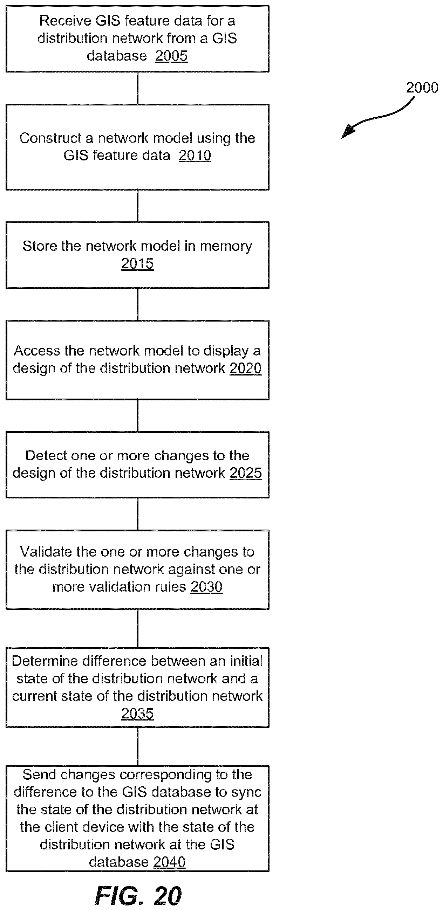

**FIG. 20** is a logic flow diagram illustrating an example method of managing GIS data in a client environment in accordance with some embodiments of the disclosed system.

The method 2000 includes the disclosed system, residing on a client device, receiving GIS feature data for a distribution network from a GIS database at block 2005. The distribution network can be the whole network or a portion thereof (e.g., of a specific area of interest). The disclosed system, at block 2010, constructs a network model using the GIS feature data, and stores the network model in memory at block 2015. At block 2020, the disclosed system, via an application, accesses the network model to display a design of the distribution network. A user can make one or more changes to the design. At block 2025, the disclosed system detects one or more changes to the design of the distribution network. The disclosed system validates the one or more changes to the distribution network against one or more validation rules at block 2030. At block 2035, the disclosed system determines difference between an initial state of the distribution network and a current state of the distribution network. The initiate state of the distribution network can be the last synced state of the distribution network (i.e., the current state of the distribution network in the GIS database). At block 2040, the disclosed system sends changes corresponding to the difference to the GIS database to sync the state of the distribution network at the client device with the state of the distribution network at the GIS database. In this manner, the GIS data from the GIS database can be manipulated and managed outside of the GIS to, among other things, provide improved performance and greater flexibility for performing various engineering analyses. Moreover, changes made outside of the GIS can be pushed back to the GIS database, periodically, on demand, or when connectivity is available, ensuring that the GIS database remains a central repository of GIS data.

### 7. Computer Systemization

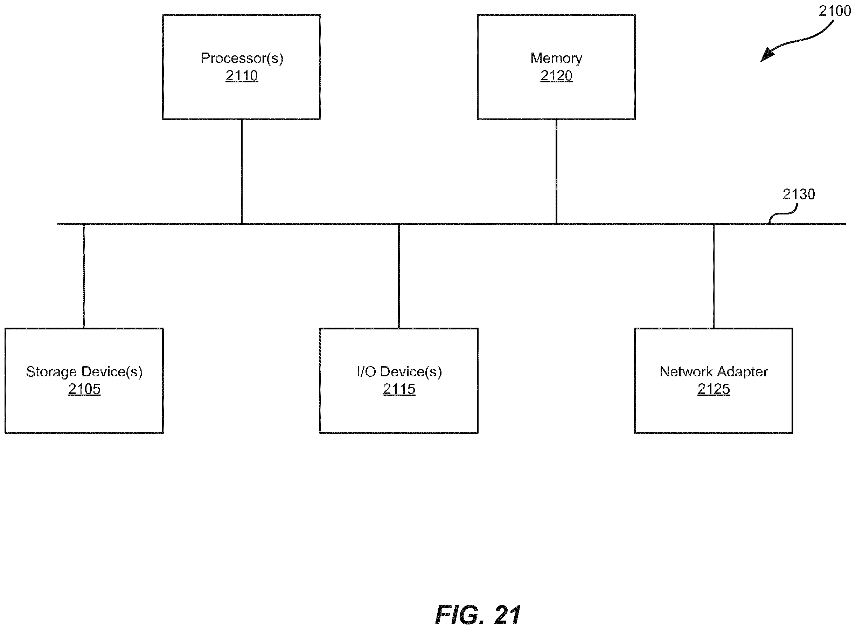

**FIG. 21** is a block diagram of an exemplary apparatus that can perform various operations, and store various information generated and/or used by such operations in some embodiments of the disclosed technology.

The apparatus can represent any computer described herein. The computer 2100 is intended to illustrate a hardware device on which any of the entities, components or methods depicted in the examples of **FIGS. 1-19** (and any other components described in this specification) can be implemented, such as a server, client device 105, storage devices, databases (e.g., GIS database 130), components described in Figures 4, 10 and 14 and/or the like. The computer 2100 includes one or more processors 2110 and memory 2120 coupled to an interconnect 2130. The interconnect 2130 is shown in **FIG. 21** as an abstraction that represents any one or more separate physical buses, point to point connections, or both connected by appropriate bridges, adapters, or controllers. The interconnect 2130, therefore, may include, for example, a system bus, a Peripheral Component Interconnect (PCI) bus or PCI-Express bus, a HyperTransport or industry standard architecture (ISA) bus, a small computer system interface (SCSI) bus, a universal serial bus (USB), IIC (I2C) bus, or an Institute of Electrical and Electronics Engineers (IEEE) standard 1394 bus, also called "Firewire".

The processor(s) 2110 is/are the central processing unit (CPU) of the computer 2100 and, thus, control the overall operation of the computer 2100. In some embodiments, the processor(s) 2110 accomplish this by executing software or firmware stored in memory 2120. The processor(s) 2110 may be, or may include, one or more programmable general-purpose or special-purpose microprocessors, digital signal processors (DSPs), programmable controllers, application specific integrated circuits (ASICs), programmable logic devices (PLDs), trusted platform modules (TPMs), or the like, or a combination of such devices.

The memory 2120 is or includes the main memory of the computer 2100. The memory 2120 represents any form of random access memory (RAM), read-only memory (ROM), flash memory, or the like, or a combination of such devices. In use, the memory 2120 may store a code. In some embodiments, the code includes a general programming module configured to recognize the general-purpose program received via the computer bus interface, and prepare the general-purpose program for execution at the processor. In another embodiment, the general programming module may be implemented using hardware circuitry such as ASICs, PLDs, or field-programmable gate arrays (FPGAs).

Also connected to the processor(s) 2110 through the interconnect 2130 are a network adapter 2125, a storage device(s) 2105 and I/O device(s) 2115. The network adapter 2125 provides the computer 2100 with the ability to communicate with remote devices, over a network and may be, for example, an Ethernet adapter or Fibre Channel adapter. The network adapter 2125 may also provide the computer 2100 with the ability to communicate with other computers within a cluster. In some embodiments, the computer 2100 may use more than one network adapter to deal with the communications within and outside of the cluster separately.

The I/O device(s) 2115 can include, for example, a keyboard, a mouse or other pointing device, disk drives, printers, a scanner, and other input and/or output devices, including a display device. The display device can include, for example, a cathode ray tube (CRT), liquid crystal display (LCD), or some other applicable known or convenient display device.

The code stored in memory 2120 can be implemented as software and/or firmware to program the processor(s) 2110 to carry out actions described above. In certain embodiments, such software or firmware may be initially provided to the computer 2100 by downloading it from a remote system through the computer 2100 (e.g., via network adapter 2125).

The technology introduced herein can be implemented by, for example, programmable circuitry (e.g., one or more microprocessors) programmed with software and/or firmware, or entirely in special-purpose hardwired (non-programmable) circuitry, or in a combination of such forms. Special-purpose hardwired circuitry may be in the form of, for example, one or more ASICs, PLDs, FPGAs, etc.

Software or firmware for use in implementing the technology introduced here may be stored on a machine-readable storage medium and may be executed by one or more general-purpose or special-purpose programmable microprocessors. A "machine-readable storage medium", as the term is used herein, includes any mechanism that can store information in a form accessible by a machine.

A machine can also be a server computer, a client computer, a personal computer (PC), a tablet PC, a laptop computer, a set-top box (STB), a personal digital assistant (PDA), a cellular telephone, an iPhone, a Blackberry, a processor, a telephone, a web appliance, a network router, switch or bridge, or any machine capable of executing a set of instructions (sequential or otherwise) that specify actions to be taken by that machine.

A machine-accessible storage medium or a storage device(s) 2105 includes, for example, recordable/non-recordable media (e.g., ROM; RAM; magnetic disk storage media; optical storage media; flash memory devices; etc.), etc., or any combination thereof. The storage medium typically may be non-transitory or include a non-transitory device. In this context, a non-transitory storage medium may include a device that is tangible, meaning that the device has a concrete physical form, although the device may change its physical state. Thus, for example, non-transitory refers to a device remaining tangible despite this change in state.

The term "logic", as used herein, can include, for example, programmable circuitry programmed with specific software and/or firmware, special-purpose hardwired circuitry, or a combination thereof.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The above detailed description of embodiments of the disclosure is not intended to be exhaustive or to limit the teachings to the precise form disclosed above. While specific embodiments of, and examples for, the disclosure are described above for illustrative purposes, various equivalent modifications are possible within the scope of the disclosure, as those skilled in the relevant art will recognize. For example, while processes or blocks are presented in a given order, alternative embodiments may perform routines having steps, or employ systems having blocks in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, or may be performed at different times. Further any specific numbers noted herein are only examples: alternative implementations may employ differing values or ranges.

The teachings of the disclosure provided herein can be applied to other systems, not necessarily the system described above. The elements and acts of the various embodiments described above can be combined to provide further embodiments.

Any patents and applications and other references noted above, including any that may be listed in accompanying filing papers, are incorporated herein by reference. Aspects of the disclosure can be modified, if necessary, to employ the systems, functions, and concepts of the various references described above to provide yet further embodiments of the disclosure.

These and other changes can be made to the disclosure in light of the above Detailed Description. While the above description describes certain embodiments of the disclosure, and describes the best mode contemplated, no matter how detailed the above appears in text, the teachings can be practiced in many ways. Details of the system may vary considerably in its implementation details, while still being encompassed by the subject matter disclosed herein. As noted above, particular terminology used when describing certain features or aspects of the disclosure should not be taken to imply that the terminology is being redefined herein to be restricted to any specific characteristics, features, or aspects of the disclosure with which that terminology is associated. In general, the terms used in the following claims should not be construed to limit the disclosure to the specific embodiments disclosed in the specification, unless the above Detailed Description section explicitly defines such terms. Accordingly, the actual scope of the disclosure encompasses not only the disclosed embodiments, but also all equivalent ways of practicing or implementing the disclosure under the claims.

From the foregoing, it will be appreciated that specific embodiments have been described herein for purposes of illustration, but that various modifications may be made without deviating from the scope of the disclosed technology. Accordingly, the disclosed technology is not limited except as by the appended claims.

## Claims

1. A method for managing Geographic Information System, GIS, data on a client device, comprising:
receiving, on a client device, GIS feature data for a distribution network from a GIS database, wherein the distribution network includes one of a water distribution network, a gas distribution network, an electric distribution network or a telecom distribution network;
constructing, on the client device, a network model using the GIS feature data received from the GIS database;
storing the network model on the client device;
accessing the network model to display a design of the distribution network on the client device;
determining a current state and an initial state of the distribution network on the client device, wherein the initial state of the distribution network on the client device corresponds to a current state of the distribution network on the GIS database;
comparing the initial and current states of the distribution network on the client device to determine changes to the design of the distribution network; and
sending the changes to the design of the distribution network to the GIS database to update the current state of the distribution network in the GIS database;
wherein constructing the network model for the distribution network includes utilizing the GIS feature data to create a set of adjacency relationships between features in the distribution network; and
using the set of adjacency relationships to generate a data structure that represents the network model for the distribution network;
detecting, on the client device, one or more changes to the design of the distribution network associated with the network model; and
validating, on the client device, the one or more changes against one or more validation rules, the validating utilizing the network model associated with the distribution network stored on the client device.

2. The method of claim 1, wherein the one or more changes to the design of the distribution network are made via a design application, and wherein the design application presents, in real time, a graphical feedback on the one or more changes based on a result of the validating.

3. The method of claim 2, wherein the graphical feedback identifies a violation of the one or more validation rules and a component in the distribution network associated with the violation as the result of the validating.

4. The method of claim 1, further comprising:
instantiating a new data structure in response to a transaction corresponding to the one or more changes to the design of the distribution network to represent a new state of the distribution network on the client device, wherein the new data structure includes objects that changed in response to the transaction and reference points for objects that did not change in response to the transaction, the reference points pointing to objects in a data structure representing an old state of the distribution network.

5. The method of claim 1, wherein sending the changes to the design of the distribution network to the GIS database to update the current state of the distribution network in the GIS database includes sending, by an application on the client device, one or more data packets including one or more commands and object attributes via an application programming interface.

6. The method of claim 5, further comprising:
renumbering objects in the data structure to store the data structure as an array on the client device, wherein an index of the array is a proxy for the corresponding object's original identifier in the GIS database; and
mapping GIS identifiers of the objects in the data structure to index values of the array.

7. The method of claim 5, wherein the data structure comprises a set of directed adjacency relationships and corresponding attributes stored in the form of an array in a memory on the client device.

8. The method of claim 5, further comprising accessing the data structure stored in the cache memory to perform a network analysis operation.

9. The method of claim 1, further comprising:
recording, on a data file on the client device, one or more commands corresponding to one or more operations to modify the design of the distribution network associated with the network model, the one or more commands causing a state of the distribution network to transition to a first state; and
merging the first state of the distribution network with a second state of the distribution network by executing at least a subset of the one or more commands against the second state of the distribution network, wherein the first and second states include changes made to the distribution network at different points of time or at different sources.

10. The method of claim 1, further comprising:
recording multiple states corresponding to the distribution network in a memory on the client device, each state being associated with a shared command history that is common to the multiple states and a distinct command history that is unique to each of the multiple states; and
responsive to user request, switching from a first state of the multiple states to a second state of the multiple states by undoing one or more commands in the distinct command history associated with the first state and applying one or more commands in the distinct command history associated with the second state.

11. A non-transitory machine-readable medium storing instructions executable by a client device, the instructions comprising:
instructions for constructing, on the client device, a network model using the GIS feature data received from the GIS database;
instructions for accessing a network model for a distribution network stored on a client device, wherein the distribution network includes one of a water distribution network, a gas distribution network, an electric distribution network or a telecom distribution network;
instructions for detecting one or more changes to the distribution network associated with the network model;
instructions for validating the one or more changes to the distribution network against one or more validation rules;
instructions for determining a current state and an initial state of the distribution network on the client device, wherein the initial state of the distribution network on the client device corresponds to a current state of the distribution network on the GIS database;
instructions for comparing the initial and current states of the distribution network on the client device to determine changes to the design of the distribution network;
instructions for sending the one or more changes to the distribution network to a GIS database to update the current state of the distribution network in the GIS database to sync the state of the distribution network at the client device with the state of the distribution network at the GIS database.

12. A computer program product configured to perform the method of any one of claims 1-10.

## Patentansprüche

1. Ein Verfahren zum Verwalten von Daten eines geografischen Informationssystems, GIS, auf einer Client-Vorrichtung, beinhaltend:
Empfangen, auf einer Client-Vorrichtung, von GIS-Feature-Daten für ein Verteilungsnetz von einer GIS-Datenbank, wobei das Verteilungsnetz eines von einem Wasserverteilungsnetz, einem Gasverteilungsnetz, einem Stromverteilungsnetz oder einem Telekommunikationsverteilungsnetz umfasst;
Erstellen, auf der Client-Vorrichtung, eines Netzmodells unter Verwendung der von der GIS-Datenbank empfangenen GIS-Feature-Daten;
Speichern des Netzmodells auf der Client-Vorrichtung;
Zugreifen auf das Netzmodell, um einen Aufbau des Verteilungsnetzes auf der Client-Vorrichtung anzuzeigen;
Bestimmen eines aktuellen Zustands und eines Anfangszustands des Verteilungsnetzes auf der Client-Vorrichtung, wobei der Anfangszustand des Verteilungsnetzes auf der Client-Vorrichtung einem aktuellen Zustand des Verteilungsnetzes in der GIS-Datenbank entspricht;
Vergleichen des Anfangs- und des aktuellen Zustands des Verteilungsnetzes auf der Client-Vorrichtung, um Änderungen an dem Aufbau des Verteilungsnetzes zu bestimmen; und
Senden der Änderungen an dem Aufbau des Verteilungsnetzes an die GIS-Datenbank, um den aktuellen Status des Verteilungsnetzes in der GIS-Datenbank zu aktualisieren; wobei das Erstellen des Netzmodells für das Verteilungsnetz das Nutzen der GIS-Feature-Daten zum Kreieren eines Satzes Adjazenzbeziehungen zwischen Features in dem Verteilungsnetz umfasst; und
Verwenden des Satzes Adjazenzbeziehungen zum Erzeugen einer Datenstruktur, die das Netzmodell für das Verteilungsnetz darstellt;
Erkennen, auf der Client-Vorrichtung, einer oder mehrerer Änderungen an dem Aufbau des mit dem Netzmodell assoziierten Verteilungsnetzes; und
Validieren, auf der Client-Vorrichtung, der einen oder der mehreren Änderungen anhand einer oder mehrerer Validierungsregeln, wobei für das Validieren das Netzmodell verwendet wird, das mit dem auf der Client-Vorrichtung gespeicherten Verteilungsnetz assoziiert ist.

2. Verfahren gemäß Anspruch 1, wobei die eine oder die mehreren Änderungen an dem Aufbau des Verteilungsnetzes über eine Aufbauanwendung vorgenommen werden und wobei die Aufbauanwendung in Echtzeit eine grafische Rückmeldung zu der einen oder den mehreren Änderungen basierend auf einem Ergebnis der Validierung präsentiert.

3. Verfahren gemäß Anspruch 2, wobei die grafische Rückmeldung einen Verstoß gegen die eine oder die mehreren Validierungsregeln und eine mit dem Verstoß assoziierte Komponente in dem Verteilungsnetz als Ergebnis des Validierens identifiziert.

4. Verfahren gemäß Anspruch 1, ferner beinhaltend:
Instanziieren einer neuen Datenstruktur als Reaktion auf eine Transaktion, die der einen oder den mehreren Änderungen an dem Aufbau des Verteilungsnetzes entspricht, um einen neuen Zustand des Verteilungsnetzes auf der Client-Vorrichtung darzustellen, wobei die neue Datenstruktur Objekte, die sich als Reaktion auf die Transaktion geändert haben, und Referenzpunkte für Objekte, die sich als Reaktion auf die Transaktion nicht geändert haben, umfasst, wobei die Referenzpunkte auf Objekte in einer Datenstruktur verweisen, die einen alten Zustand des Verteilungsnetzes darstellen.

5. Verfahren gemäß Anspruch 1, wobei das Senden der Änderungen an dem Aufbau des Verteilungsnetzes an die GIS-Datenbank zum Aktualisieren des aktuellen Zustands des Verteilungsnetzes in der GIS-Datenbank das Senden, durch eine Anwendung auf der Client-Vorrichtung, eines oder mehrerer Datenpakete, die ein oder mehrere Befehle und Objektattribute umfassen, über eine Anwendungsprogrammierschnittstelle umfasst.

6. Verfahren gemäß Anspruch 5, ferner beinhaltend:
Neunummerieren von Objekten in der Datenstruktur, um die Datenstruktur als ein Array auf der Client-Vorrichtung zu speichern, wobei ein Index des Arrays ein Proxy für die ursprüngliche Kennung des entsprechenden Objekts in der GIS-Datenbank ist; und
Zuordnen der GIS-Kennungen der Objekte in der Datenstruktur zu Indexwerten des Arrays.

7. Verfahren gemäß Anspruch 5, wobei die Datenstruktur einen Satz gerichteter Adjazenzbeziehungen und entsprechende Attribute, die in Form eines Arrays in einem Speicher auf der Client-Vorrichtung gespeichert sind, beinhaltet.

8. Verfahren gemäß Anspruch 5, ferner beinhaltend das Zugreifen auf die in dem Cache-Speicher gespeicherte Datenstruktur zum Durchführen einer Netzanalyseoperation.

9. Verfahren gemäß Anspruch 1, ferner beinhaltend:
Aufzeichnen, in einer Datendatei auf der Client-Vorrichtung, eines oder mehrerer Befehle, die einer oder mehreren Operationen entsprechen, um den Aufbau des mit dem Netzmodell assoziierten Verteilungsnetzes zu modifizieren, wobei der eine oder die mehreren Befehle einen Übergang eines Zustands des Verteilungsnetzes in einen ersten Zustand bewirken; und
Zusammenführen des ersten Zustands des Verteilungsnetzes mit einem zweiten Zustand des Verteilungsnetzes durch das Ausführen mindestens einer Teilmenge des einen oder der mehreren Befehle mit Bezug auf den zweiten Zustand des Verteilungsnetzes, wobei der erste und der zweite Zustand Änderungen umfassen, die zu unterschiedlichen Zeitpunkten oder an unterschiedlichen Quellen an dem Verteilungsnetz vorgenommen wurden.

10. Verfahren gemäß Anspruch 1, ferner beinhaltend:
Aufzeichnen mehrerer Zustände, die dem Verteilungsnetz entsprechen, in einem Speicher auf der Client-Vorrichtung, wobei jeder Zustand mit einem gemeinsamen Befehlsverlauf, der den mehreren Zuständen gemeinsam ist, und einem eigenständigen Befehlsverlauf, der für jeden der mehreren Zustände einzigartig ist, assoziiert ist; und
als Reaktion auf eine Benutzeranforderung, Umschalten von einem ersten Zustand der mehreren Zustände in einen zweiten Zustand der mehreren Zustände durch das Rückgängigmachen eines oder mehrerer Befehle in dem eigenständigen Befehlsverlauf, der mit dem ersten Zustand assoziiert ist, und das Anwenden eines oder mehrerer Befehle in dem eigenständigen Befehlsverlauf, der mit dem zweiten Zustand assoziiert ist.

11. Ein nicht transitorisches maschinenlesbares Medium, das Anweisungen speichert, die von einer Client-Vorrichtung ausführbar sind, wobei die Anweisungen Folgendes beinhalten:
Anweisungen zum Erstellen, auf der Client-Vorrichtung, eines Netzmodells unter Verwendung der von der GIS-Datenbank empfangenen GIS-Feature-Daten;
Anweisungen zum Zugreifen auf ein Netzmodell für ein auf einer Client-Vorrichtung gespeichertes Verteilungsnetz, wobei das Verteilungsnetz eines von einem Wasserverteilungsnetz, einem Gasverteilungsnetz, einem Stromverteilungsnetz oder einem Telekommunikationsverteilungsnetz umfasst;
Anweisungen zum Erkennen einer oder mehrerer Änderungen an dem mit dem Netzmodell assoziierten Verteilungsnetz;
Anweisungen zum Validieren der einen oder der mehreren Änderungen an dem Verteilungsnetz anhand einer oder mehrerer Validierungsregeln;
Anweisungen zum Bestimmen eines aktuellen Zustands und eines Anfangszustands des Verteilungsnetzes auf der Client-Vorrichtung, wobei der Anfangszustand des Verteilungsnetzes auf der Client-Vorrichtung einem aktuellen Zustand des Verteilungsnetzes in der GIS-Datenbank entspricht;
Anweisungen zum Vergleichen des Anfangs- und des aktuellen Zustands des Verteilungsnetzes auf der Client-Vorrichtung, um Änderungen an dem Aufbau des Verteilungsnetzes zu bestimmen;
Anweisungen zum Senden der einen oder der mehreren Änderungen an dem Verteilungsnetz an eine GIS-Datenbank, um den aktuellen Status des Verteilungsnetzes in der GIS-Datenbank zu aktualisieren, um den Zustand des Verteilungsnetzes an der Client-Vorrichtung mit dem Zustand des Verteilungsnetzes in der GIS-Datenbank zu synchronisieren.

12. Ein Computerprogrammprodukt, das konfiguriert ist, um das Verfahren gemäß einem der Ansprüche 1-10 durchzuführen.

## Revendications

1. Un procédé pour la gestion de données de Système d'Information Géographique, SIG, sur un dispositif client, comprenant :
la réception, sur un dispositif client, de données d'élément de SIG pour un réseau de distribution en provenance d'une base de données de SIG, le réseau de distribution incluant un réseau parmi un réseau de distribution d'eau, un réseau de distribution de gaz, un réseau de distribution d'électricité et un réseau de distribution de télécommunication ;
la construction, sur le dispositif client, d'un modèle de réseau en utilisant les données d'élément de SIG reçues en provenance de la base de données de SIG ; le stockage du modèle de réseau sur le dispositif client ;
l'accès au modèle de réseau pour afficher un dessin de conception du réseau de distribution sur le dispositif client ;
la détermination d'un état actuel et d'un état initial du réseau de distribution sur le dispositif client, l'état initial du réseau de distribution sur le dispositif client correspondant à un état actuel du réseau de distribution sur la base de données de SIG ;
la comparaison des états initial et actuel du réseau de distribution sur le dispositif client pour déterminer des changements apportés au dessin de conception du réseau de distribution ; et
l'envoi des changements apportés au dessin de conception du réseau de distribution à destination de la base de données de SIG pour mettre à jour l'état actuel du réseau de distribution dans la base de données de SIG ;
dans lequel la construction du modèle de réseau pour le réseau de distribution inclut l'emploi des données d'élément de SIG pour créer un ensemble de relations d'adjacence entre des éléments dans le réseau de distribution ; et
l'utilisation de l'ensemble de relations d'adjacence pour générer une structure de données qui représente le modèle de réseau pour le réseau de distribution ;
la détection, sur le dispositif client, d'un ou de plusieurs changements apportés au dessin de conception du réseau de distribution associé au modèle de réseau ; et
la validation, sur le dispositif client, des un ou plusieurs changements par rapport à une ou plusieurs règles de validation, la validation employant le modèle de réseau associé au réseau de distribution stocké sur le dispositif client.

2. Le procédé de la revendication 1, dans lequel les un ou plusieurs changements apportés au dessin de conception du réseau de distribution sont réalisés par l'intermédiaire d'une application de dessin de conception, et dans lequel l'application de dessin de conception présente, en temps réel, une rétroaction graphique sur les un ou plusieurs changements sur la base d'un résultat de la validation.

3. Le procédé de la revendication 2, dans lequel la rétroaction graphique identifie une violation des une ou plusieurs règles de validation et un composant dans le réseau de distribution associé à la violation comme étant le résultat de la validation.

4. Le procédé de la revendication 1, comprenant en outre :
l'instanciation d'une nouvelle structure de données en réponse à une transaction correspondant aux un ou plusieurs changements apportés au dessin de conception du réseau de distribution pour représenter un nouvel état du réseau de distribution sur le dispositif client, la nouvelle structure de données incluant des objets qui ont changé en réponse à la transaction et des points de référence pour des objets qui n'ont pas changé en réponse à la transaction, les points de référence désignant des objets dans une structure de données représentant un ancien état du réseau de distribution.

5. Le procédé de la revendication 1, dans lequel l'envoi des changements apportés au dessin de conception du réseau de distribution à destination de la base de données de SIG pour mettre à jour l'état actuel du réseau de distribution dans la base de données de SIG inclut l'envoi, par une application sur le dispositif client, d'un ou de plusieurs paquets de données incluant une ou plusieurs commandes et des attributs d'objet par l'intermédiaire d'une interface de programmation d'application.

6. Le procédé de la revendication 5, comprenant en outre :
la renumérotation d'objets dans la structure de données pour stocker la structure de données en un tableau sur le dispositif client, dans lequel un index du tableau est un proxy pour l'identifiant d'origine de l'objet correspondant dans la base de données de SIG ; et
la mise en correspondance d'identifiants de SIG des objets dans la structure de données avec des valeurs d'index du tableau.

7. Le procédé de la revendication 5, dans lequel la structure de données comprend un ensemble de relations d'adjacence dirigées et d'attributs correspondants stocké sous la forme d'un tableau dans une mémoire sur le dispositif client.

8. Le procédé de la revendication 5, comprenant en outre l'accès à la structure de données stockée dans la mémoire cache pour effectuer une opération d'analyse de réseau.

9. Le procédé de la revendication 1, comprenant en outre :
l'enregistrement, sur un fichier de données sur le dispositif client, d'une ou de plusieurs commandes correspondant à une ou plusieurs opérations pour modifier le dessin de conception du réseau de distribution associé au modèle de réseau, les une ou plusieurs commandes amenant un état du réseau de distribution à réaliser une transition vers un premier état ; et
le fusionnement du premier état du réseau de distribution avec un deuxième état du réseau de distribution par l'exécution d'au moins un sous-ensemble des une ou plusieurs commandes par rapport au deuxième état du réseau de distribution, les premier et deuxième états incluant des changements réalisés sur le réseau de distribution à différents instants temporels ou au niveau de différentes sources.

10. Le procédé de la revendication 1, comprenant en outre :
l'enregistrement de multiples états correspondant au réseau de distribution dans une mémoire sur le dispositif client, chaque état étant associé à un historique de commande partagé qui est commun aux multiples états et à un historique de commande distinct qui est unique à chacun des multiples états ; et
en réponse à une demande utilisateur, le passage d'un premier état des multiples états à un deuxième état des multiples états par l'annulation d'une ou de plusieurs commandes dans l'historique de commande distinct associé au premier état et par l'application d'une ou de plusieurs commandes dans l'historique de commande distinct associé au deuxième état.

11. Un support non transitoire lisible par machine stockant des instructions exécutables par un dispositif client, les instructions comprenant :
des instructions pour la construction, sur le dispositif client, d'un modèle de réseau en utilisant les données d'élément de SIG reçues en provenance de la base de données de SIG ;
des instructions pour l'accès à un modèle de réseau pour un réseau de distribution stocké sur un dispositif client, le réseau de distribution incluant un réseau parmi un réseau de distribution d'eau, un réseau de distribution de gaz, un réseau de distribution d'électricité et un réseau de distribution de télécommunication ;
des instructions pour la détection d'un ou de plusieurs changements apportés au réseau de distribution associé au modèle de réseau ;
des instructions pour la validation des un ou plusieurs changements apportés au réseau de distribution par rapport à une ou plusieurs règles de validation ;
des instructions pour la détermination d'un état actuel et d'un état initial du réseau de distribution sur le dispositif client, l'état initial du réseau de distribution sur le dispositif client correspondant à un état actuel du réseau de distribution sur la base de données de SIG ;
des instructions pour la comparaison des états initial et actuel du réseau de distribution sur le dispositif client pour déterminer des changements apportés au dessin de conception du réseau de distribution ;
des instructions pour l'envoi des un ou plusieurs changements apportés au réseau de distribution à destination d'une base de données de SIG pour mettre à jour l'état actuel du réseau de distribution dans la base de données de SIG afin de synchroniser l'état du réseau de distribution au niveau du dispositif client sur l'état du réseau de distribution au niveau de la base de données de SIG.

12. Un produit programme informatique configuré pour effectuer le procédé de n'importe laquelle des revendications 1 à 10.
